# EUROPÄISCHE PATENTSCHRIFT

(11) **EP 3 433 826 B1**
(45) Veröffentlichungstag und Bekanntmachung des Hinweises auf die Patenterteilung: **02.09.2020**
(21) Anmeldenummer: 17713610.8
(22) Anmeldetag: 23.03.2017
(51) Int. Cl.: F24D 19/10, F24H 9/20, G06Q 50/06, H02J 3/14

(54) **VERFAHREN ZUM STEUERN EINER ENERGIEVERSORGUNGSANLAGE**
METHOD FOR CONTROLLING A POWER SUPPLY SYSTEM
PROCÉDÉ DE COMMANDE D'UN SYSTÈME D'ALIMENTATION EN ÉNERGIE ÉLECTRIQUE

(30) Priorität: 24.03.2016 DE 102016205036
(43) Veröffentlichungstag der Anmeldung: 30.01.2019
(60) Teilanmeldung: 20155671.9
(73) Patentinhaber: Viessmann Werke GmbH & Co. KG, 35108 Allendorf (DE)
(72) Erfinder: ARNOLD, Christian, 36119 Neuhof-Rommerz (DE); BOCK, Martin, 35110 Frankenau (DE); GRAD, Andrej, 35088 Battenberg (DE); MAURER, Tobias, 35108 Allendorf (DE); OSTERLOH, Reinhard, 59955 Winterberg (DE); TIMMERMANN, Jörg, 35088 Battenberg (DE)
(74) Vertreter: MERH-IP Matias Erny Reichl Hoffmann Patentanwälte PartG mbB
(86) Internationale Anmeldenummer: PCT/EP2017/056927
(87) Internationale Veröffentlichungsnummer: WO 2017/162793

(56) Entgegenhaltungen:
- EP-A2- 1 202 425
- US-A1- 2011 012 427
- US-A1- 2011 071 690

## Beschreibung

Die vorliegende Erfindung betrifft ein Verfahren zum Steuern einer Energieversorgungsanlage mit mindestens zwei Energieerzeugern, die Energie in Form von Wärme und/oder Kälte und/oder elektrischer Energie bereitstellen. Die Erfindung betrifft ferner eine Steuereinrichtung zum Steuern einer Energieversorgungsanlage.

Ein Verfahren zum Betreiben eines Systems mit mehreren Wärmeerzeugungseinrichtungen ist beispielsweise aus der EP 2187136 A2 bekannt. Das System kann Wärmeleistung unter Verwendung mehrerer Wärmeerzeugungseinrichtungen bereitstellen, wobei die Verteilung der Wärmeleistung auf die einzelnen Wärmeerzeugungseinrichtungen variabel ist, so dass diese nahe an ihrem optimalen Wirkungsgrad betrieben werden können. Die Zuteilung der Leistung kann nicht nur über ein übergeordnetes Kesselmanagementsystem erfolgen, sondern auch durch Abstimmung der einzelnen Wärmeerzeugungseinrichtungen untereinander erfolgen.

Aus der internationalen Patentanmeldung WO 2009/141176 A1 ist ein mobiles Heizsystem bekannt, das eine Mehrzahl von brennstoffbetriebenen Heizgeräten aufweist, die über ein Bussystem miteinander in Kommunikationsverbindung stehen. Das Heizsystem ist derart eingerichtet, dass sich beim Starten des Heizsystems, basierend auf vorbestimmten Regeln, eines der Heizgeräte als Master bezüglich der Ansteuerung von weiteren, an das Bussystem angeschlossenen Heizgeräten konfiguriert. Die verbleibenden Heizgeräte werden als Slaves konfiguriert.

Die europäische Patentanmeldung EP 2144130 A1 offenbart ein Gruppenverwaltungssystem, das eine Vielzahl von Vorrichtungen kollektiv steuern kann und ein flexibles Hinzufügen oder Ändern von Vorrichtungsgruppen erlaubt.

Ein hybrides Heizsystem bestehend aus mindestens einem Brennwertkessel und mindestens einem Nicht-Brennwertkessel ist aus der internationalen Patentanmeldung WO 2008/091970 A2 bekannt. Das Ein- beziehungsweise Ausschalten der einzelnen Kessel durch eine Steuerung erfolgt nach Bestimmung der Heizlast unter anderem auf Basis des Flusses in der Hauptleitung des Heizsystems sowie weiterer Startkriterien. Die Auswahl der Kessel erfolgt ferner in Abhängigkeit der Außentemperatur sowie der Betriebsstunden der einzelnen Kessel.

US 2011/012427 A1 lehrt ein Verfahren zum Steuern einer Energieversorgungsanlage.

Der vorliegenden Erfindung liegt die Aufgabe zugrunde, ein Verfahren zum Steuern einer Energieversorgungsanlage anzugeben, womit eine im Vergleich zum Stand der Technik verbesserte Lebensdauer der eingesetzten Energieerzeuger erzielt werden kann. Insbesondere soll ein Verfahren zum Steuern einer Energieversorgungsanlage bereitgestellt werden, bei dem die Anzahl der Ein- und Ausschaltvorgänge reduziert werden kann. Durch das erfindungsgemäße Verfahren kann die Nutzungsdauer der Energieerzeuger besonders gleichmäßig verteilt werden, wodurch ein schonender Betrieb und eine verbesserte Lebensdauer der Energieerzeuger erreicht werden können. Ferner ist hierdurch ein besonders sicherer Betrieb der Energieversorgungsanlage erreichbar.

Die Erfinder haben erkannt, dass insbesondere Energieversorgungsanlagen, die mehrere verschiedene Energieformen bereitstellen, eine Vielzahl unterschiedlicher Anforderungen erfüllen müssen. Zum einen kann eine Vielzahl verschiedener Bedarfsanforderungen vorliegen. Zum anderen können bei einer Vielzahl von Energieerzeugern auch eine Vielzahl unterschiedlicher Restriktionen hinsichtlich der bereitstellbaren Leistung und/oder der aktuellen Verfügbarkeit der Energieerzeuger vorliegen. Um die Energieversorgungsanlage bedarfsgerecht zu Bertreiben, müssen alle Bedarfsanforderungen und Restriktionen der Energieerzeuger berücksichtigt werden. Die erfindungsgemäßen Verfahren ermöglichen es nun zum ersten Mal, eine solche Energieversorgungsanlage und insbesondere auch multivalente Energieversorgungsanlagen in koordinierter Weise zu steuern.

Die Lösung der Aufgabe gelingt durch ein Verfahren zum Steuern einer Energieversorgungsanlage, wobei die Energieversorgungsanlage mindestens zwei Energieerzeugeraufweist, die dazu ausgelegt sind, jeweils mindestens eine Energieform Wärme und/oder Kälte und/oder elektrischer Energie bereitzustellen. Jeder Energieerzeuger weist zudem eine Regeleinrichtung zum Regeln des Energieerzeugers auf. Die Energieversorgungsanlage umfasst eine Steuereinrichtung zum koordinierten Steuern der Regeleinrichtungen, wobei die Steuereinrichtung zunächst eine Energiebereitstellungsanforderung zum Bereitstellen von Energie in Form von Wärme und/oder Kälte und/oder elektrischer Energie erfasst. Für jede Energieform ermittelt die Steuereinrichtung, welche Energieerzeuger zum Erfüllen der Energiebereitstellungsanforderung erforderlich sind und erzeugt Einschaltforderungen für die zum Erfüllen der Energiebereitstellungsanforderung erforderlichen Energieerzeuger und Ausschaltforderungen für die zum Erfüllen der Energiebereitstellungsanforderung nicht erforderlichen Energieerzeuger. Für jeden Energieerzeuger ermittelt die Steuereinrichtung, ob jeweils eine, mehrere oder keine Einschaltforderung vorliegt, und ob eine, mehrere oder keine Ausschaltforderung vorliegt.

Gemäß einem ersten Aspekt der Erfindung gibt die Steuereinrichtung für jeden Energieerzeuger, für den mindestens eine Einschaltforderung vorliegt, eine Einschaltforderung an die entsprechende Regeleinrichtungaus. Für jeden Energieerzeuger, für den keine Einschaltforderung und mindestens eine Ausschaltforderung vorliegen, gibt die Steuereinrichtung eine Ausschaltforderung an die entsprechende Regeleinrichtung aus. Das Ausgeben der Ein- und/oder Ausschaltforderungen erfolgt somit gemäß einer Regel "Ein vor Aus".

Die Regel "Ein vor Aus" sorgt dafür, dass alle Energieerzeuger, die mindestens eine Einschaltforderung erhalten eingeschaltet werden beziehungsweise eingeschaltet bleiben. Diese Regel lässt sich besonders einfach implementieren, da üblicherweise keine weiteren Parameter berücksichtigt werden müssen. Die Regel "Ein vor Aus" führt dazu, dass jederzeit ausreichend Energieerzeuger in Betrieb sind, um vorliegende Bedarfsanforderungen zu erfüllen.

Gemäß einem zweiten Aspekt der Erfindung gibt die Steuereinrichtung für jeden Energieerzeuger, für den mindestens eine Ausschaltforderung vorliegt, eine Ausschaltforderung an die entsprechende Regeleinrichtung aus. Für jeden Energieerzeuger, für den keine Ausschaltforderung und mindestens eine Einschaltforderung vorliegen, gibt die Steuereinrichtung eine Einschaltforderung an die entsprechende Regeleinrichtung aus. Das Ausgeben der Ein- und/oder Ausschaltforderungen erfolgt somit gemäß einer Regel "Aus vor Ein". Es kann hiermit eine besonders gleichmäßig auf alle Energieerzeuger verteilte Auslastung der Energieerzeuger erreicht werden.

Die Regel "Aus vor Ein" sorgt dafür, dass alle Energieerzeuger, die mindestens eine Ausschaltforderung erhalten ausgeschaltet werden beziehungsweise ausgeschaltet bleiben. Diese Regel lässt sich besonders einfach implementieren, da üblicherweise keine weiteren Parameter berücksichtigt werden müssen. Die Regel "Aus vor Ein" führt dazu, dass eine möglichst geringe Anzahl von Energieerzeugern in Betrieb sind, um vorliegende Bedarfsanforderungen zu erfüllen. Es kann hiermit eine besonders hohe Auslastung einzelner Energieerzeuger erreicht werden.

Im Sinne der Erfindung ist ein Energieerzeuger "eingeschaltet", wenn die von dem Energieerzeuger bereitgestellte Leistung einen vorgegebenen Leistungs-Schwellenwert überschreitet. Zum "Einschalten" eines Energieerzeugers wird also die von dem Energieerzeuger bereitgestellte Leistung so weit erhöht, bis die von dem Energieerzeuger bereitgestellte Leistung größer ist als der vorgegebene Leistungs-Schwellenwert.

Im Sinne der Erfindung ist ein Energieerzeuger "ausgeschaltet", wenn die von dem Energieerzeuger bereitgestellte Leistung einen vorgegebenen Leistungs-Schwellenwert unterschreitet. Zum "Ausschalten" eines Energieerzeugers wird also die von dem Energieerzeuger bereitgestellte Leistung so weit abgesenkt, bis die von dem Energieerzeuger bereitgestellte Leistung kleiner ist als der vorgegebene Leistungs-Schwellenwert.

Vorzugsweise ist die Energieversorgungsanlage eine multivalente Energieversorgungsanlage, deren Energieerzeuger insgesamt mindestens zwei verschiedene Energieträger nutzen.

Eine multivalente Energieversorgungsanlage ist eine Energieversorgungsanlage, die mehr als einen Energieträger als Energiequelle verwendet. Sie weist mindestens zwei Energieerzeuger auf, die jeweils eine nutzbare Energieform, wie zum Beispiel Wärme, Kälte, mechanische Energie und/oder elektrische Energie bereitstellen. Wärme kann beispielsweise für eine Warmwasserversorgung und/oder eine Heizungsanlage und/oder als Prozesswärme, beispielsweise für industrielle Anwendungen bereitgestellt werden. Zum Transportieren der Wärme wird üblicherweise ein fluides Trägermedium, also ein Gas oder eine Flüssigkeit verwendet, beispielweise Wasser oder Wasserdampf.

Die mindestens zwei Energieerzeuger einer multivalenten Energieversorgungsanlage nutzen in Summe mindestens zwei verschiedene Energieträger. Als Energieträger können fossile und/oder regenerative Energieträger zum Einsatz kommen. Beispielsweise können zwei oder mehr aus der folgenden Liste verwendet werden: Kohle, Erdgas, Heizöl, Diesel, Benzin, Wasserstoff, Biogas, Holz (zum Beispiel in Form von Pellets und/oder Hackschnitzeln) oder andere Arten von Biomasse, geothermische Energie, Sonnenstrahlung, Wind, elektrische Energie (beispielsweise elektrischer Strom und/oder elektrische Spannung), Fernwärme, mechanische Energie (zum Beispiel Wasserkraft). Durch die Verwendung verschiedener Energieträger kann die Zuverlässigkeit der Energieversorgung verbessert werden, da eine Abhängigkeit von der Verfügbarkeit eines Energieträgers (wie zum Beispiel Sonne und/oder Wind) verringert werden kann.

Insbesondere kann eine multivalente Energieversorgungsanlage eine Kombination aus regenerativen und fossilen Energieträgern verwenden, so dass ein besonders zuverlässiger Betrieb der Energieversorgungsanlage erreicht werden kann, da eine zeitlich schwankende Verfügbarkeit eines der genutzten Energieträger durch Verwenden mindestens eines weiteren Energieträgers ausgeglichen werden kann. Hierdurch erlaubt es das erfindungsgemäße Verfahren, dass die Steuerung der Energieversorgungsanlage auf Bedingungen reagieren kann, die sich zeitlich ändern.

So kann zum Beispiel ein Energieerzeuger, der die Sonne als Energiequelle nutzt, nachts keine Energie bereitstellen. Eine Windturbine kann bei Windstille keine Energie bereitstellen. Bei einer Wärmepumpe kann ein Mindestintervall vorgegeben sein, in dem die Wärmepumpe nicht ausgeschaltet werden darf, beziehungsweise ein Zeitraum, in dem die Wärmepumpe nach einem Ausschalten nicht wieder eingeschaltet werden darf. All diese und weitere spezifische Eigenschaften können Auswirkungen auf den Betrieb einer multivalenten Energieversorgungsanlage haben. Die Steuereinrichtung kann daher dafür ausgelegt sein, die Energieversorgungsanlage in Abhängigkeit der spezifischen Eigenschaften der Energieerzeuger zu steuern.

Eine multivalente Energieversorgungsanlage weist mindestens zwei Energieerzeuger auf, die jeweils mindestens einen der zuvor genannten Energieträger nutzen, um Energie in Form von Wärme, Kälte und/oder elektrischer Energie bereitzustellen, beispielsweise zwei oder mehr aus der folgenden Liste, die eine nicht abschließende Aufzählung ist: Ölheizkessel, Gasheizkessel, Brennwertkessel, Gasmotor, Gasturbine, Blockheizkraftwerk (BHKW), Holzkessel, (elektrische) Wärmepumpe, Photovoltaikanlage, Windturbine, thermischer Sonnenkollektor, Brennstoffzelle. Außerdem kann eine Wärme-Kraft-Kopplung, beispielsweise mit einem Stirlingmotor implementiert sein.

Um eine multivalente Energieversorgungsanlage optimal zu betreiben, muss die Steuerung der Energieversorgungsanlage in Abhängigkeit der spezifischen Eigenschaften der Energieerzeuger, die unter anderem von der Art des genutzten Energieträgers abhängen, erfolgen. Die vorliegende Erfindung zielt unter anderem darauf ab, spezifischen Eigenschaften von Energieerzeugern in synergetischer Weise miteinander zu kombinieren. In anderen Worten ausgedrückt erlaubt es das erfindungsgemäße Verfahren, die jeweiligen Vorteile verschiedener Energieträger, insbesondere in Hinblick auf deren Verfügbarkeit und/oder Energiegehalt optimal miteinander zu kombinieren. Dies gelingt durch eine koordinierte Steuerung der Energieerzeuger, so dass aus der Multivalenz der Energieversorgungsanlage, also der Nutzung unterschiedlicher Energieträger, ein Vorteil gegenüber monovalenten Energieversorgungsanlagen, die nur einen Energieträgernutzen, erzielt werden kann.

Das Steuern einer multivalenten Energieversorgungsanlage kann besonders komplex sein und erfordert in der Regel eine auf die konkrete Anlagenkonfiguration angepasste, maßgeschneiderte Lösung, wie zum Beispiel eine Speicherprogrammierbare Steuerung. Der Entwicklungsaufwand und die damit verbundenen Kosten zum Bereitstellen einer Anlagensteuerung können je nach Komplexität der multivalenten Energieversorgungsanlage sehr hoch ausfallen. Außerdem kann bei der Installation einer multivalenten Energieversorgungsanlage die Konfiguration einer entsprechenden Steuerung sehr kompliziert und zeitintensiv sein. Ein bevorzugtes Verfahren zielt darauf ab, eine Vielzahl verschiedener multivalenter Energieversorgungsanlagen mit unterschiedlich aufgebauten Infrastrukturen und unterschiedlichen Komponenten optimal zu steuern. Eine bevorzugte Steuereinrichtung ist dafür ausgelegt, eine Vielzahl verschiedener multivalenter Energieversorgungsanlagen optimal zu steuern.

Eine erfindungsgemäße Steuereinrichtung kann dafür ausgelegt sein, die erfindungsgemäßen Verfahren zum Steuern einer Energieversorgungsanlage ausführen. Insbesondere kann die Steuereinrichtung eine Vielzahl unterschiedlicher Anlagenkonfigurationen steuern, ohne für jede neue oder geänderte Anlagenkonfiguration jeweils neu programmiert zu werden. Stattdessen muss die Steuereinrichtung zum Steuern einer anderen oder geänderten Anlagenkonfiguration mit unterschiedlichen Randbedingungen nur entsprechend neu konfiguriert werden.

Koordiniertes Steuern der Regeleinrichtungen bedeutet, dass die Steuereinrichtung beim Bestimmen der Sollwerte und/oder beim Erzeugen von Einschaltforderungen und/oder beim Erzeugen von Ausschaltforderungen die Gesamtheit der Energieerzeuger in der Energieversorgungsanlage berücksichtigt. Dies kann beinhalten, dass bei gleichzeitigem Vorliegen einer Vielzahl von Energiebereitstellungsanforderungen für verschiedene Energieformen zu berücksichtigen ist, welcher Energieerzeuger welche Energieform(en) bereitstellen kann. Ferner kann es nötig sein, dass die Steuereinrichtung bestimmt, ob mehrere Energieerzeuger erforderlich sind, um die Energiebereitstellungsanforderung(en) zu erfüllen. Beim Auswählen der Energieerzeuger zum Erfüllen der Energiebereitstellungsanforderung(en) kann die Steuereinrichtung zudem beachten, wie viel Zeit die unterschiedlichen Energieerzeuger benötigen, um einen bestimmten Sollwert zu erreichen und/oder ob Restriktionen bezüglich der Verfügbarkeit eines durch die Energieerzeuger genutzten Energieträgers vorliegen.

Um ein koordiniertes Steuern der Regeleinrichtungen zu ermöglichen kann die Steuereinrichtung dafür ausgelegt sein, eine Vielzahl von spezifischen Eigenschaften der Energieerzeuger zu erfassen und gegebenenfalls miteinander zu vergleichen und/oder Abhängigkeiten zwischen den Energieerzeugern zu erkennen und zu berücksichtigen. Insbesondere können spezifische Eigenschaften hinsichtlich der Leistungsabgabe der Energieerzeuger bei der Steuerung der Energieversorgungsanlage berücksichtigt werden. Spezifische Eigenschaften hinsichtlich der Leistungsabgabe umfassen unter anderem eine maximal durch den Energieerzeuger bereitstellbare Leistung und die Zeit, die der Energieerzeuger benötigt, um einen ausgeschalteten in einen optimalen Betriebszustand überzugehen.

Die verschiedenen Energieerzeuger können sehr unterschiedliche spezifische Eigenschaften aufweisen und dementsprechend unterschiedliche oder sogar gegensätzliche Anforderungen bei deren Betrieb in einer Energieversorgungsanlage stellen. Im Folgenden werden typische spezifische Eigenschaften einiger ausgewählter Energieerzeuger beispielhaft beschrieben.

Ein Ölheizkessel beziehungsweise Gasheizkessel nutzt die fossilen Energiequellen Heizöl beziehungsweise Erdgas und liefert Wärme, die üblicherweise auf ein fluides Trägermedium, meistens Wasser, übertragen wird. Er kann innerhalb kurzer Zeit hohe Leistungen liefern und auch schnell ausgeschaltet werden. Ein solcher Heizkessel ist gut regelbar und kann daher im modulierenden Betrieb verwendet werden. Ein Heizkessel erlaubt zudem häufiges Ein- und Ausschalten und kann daher auch zweistufig im Ein-/Ausschaltbetrieb eingesetzt werden. Ölheizkessel und Gasheizkessel sind somit in ihrem Betrieb besonders flexibel einsetzbar und werden häufig als sogenannte Spitzenlastkessel verwendet, die schnell auf Schwankungen von Energiebereitstellungsanforderungen reagieren sollen. Die Energiegesamtkosten, welche die Kosten des Energieträgers selbst sowie die Kosten der Wartung und die Investitionskosten für den Heizkessel berücksichtigen, bewegen sich im Vergleich mit anderen Energieerzeugern auf mittlerem Niveau.

Ein Blockheizkraftwerk (BHKW) nutzt üblicherweise fossile Energiequellen, könnte aber auch mit Biogas oder Wasserstoff, der aus regenerativen Quellen stammt, betrieben werden. Es liefert Wärme und elektrische Energie (elektrischer Strom und/oder elektrische Spannung), ist gut regelbar und kann schnell auf hohe Leistungen hochgefahren und auch schnell wieder runtergefahren werden. Im Unterschied zum Heizkessel soll das BHKW aber nicht häufig einbeziehungsweise ausgeschaltet werden. Um ein BHKW wirtschaftlich zu betreiben wird ist es in der Regel im Dauerbetrieb eingesetzt. Trotz hoher Investitionskosten kommt das BHKW insgesamt somit auf relativ niedrige Energiegesamtkosten.

Ein Holzkessel nutzt festen Brennstoff aus einer nachwachsenden Energiequelle (Holz, zum Beispiel in Form von Pellets oder Hackschnitzel) und liefert Wärme. Er ist nur mäßig regelbar und kann nur relativ langsam auf hohe Leistungen hochgefahren beziehungsweise wieder runtergefahren werden. Aufgrund der langen Schaltzeiten soll ein Holzkessel nicht häufig einbeziehungsweise ausgeschaltet werden. Beim Ausschalten muss schon aus Sicherheitsgründen üblicherweise abgewartet werden, bis der bereits in der Brennkammer befindliche Brennstoff vollständig verbrannt ist. Beim Einschalten muss hingegen zunächst ausreichend Brennstoff in die Brennkammer transportiert und entzündet werden. Er verursacht relativ niedrige Energiegesamtkosten. Daher wird er meist als Grundlastkessel verwendet, der möglichst kontinuierlich in Betrieb ist und eine Mindestenergieanforderung einer Energieversorgungsanlage erfüllen kann. Um auf Schwankungen in der angeforderten Energiemenge reagieren zu können, wird ein Holzkessel meist in Kombination mit einem Pufferspeicher verwendet, der die vom Holzkessel bereitgestellte Wärme zwischenspeichert, wenn die von den Verbrauchern geforderte Wärmemenge kleiner als die vom Holzkessel bereitgestellte Wärmemenge ist. Ist die von den Verbrauchern geforderte Wärmemenge größer als die vom Holzkessel bereitgestellte Wärmemenge, kann zunächst die gespeicherte Wärmemenge vom Pufferspeicher wieder abgegeben werden. Alternativ oder zusätzlich zum Pufferspeicher wird häufig ein Gasheizkessel zusammen mit Holzkesseln in einer Energieversorgungsanlage verwendet. Der Gasheizkessel wird dann eingeschaltet, wenn die geforderte Wärmemenge die vom Holzkessel und vom Pufferspeicher verfügbare Wärmemenge überschreitet. Der Gasheizkessel wird also als Spitzenlastkessel benutzt. Meist werden Holzkessel paarweise betrieben, damit stets mindestens einer der beiden Holzkessel betriebsbereit ist.

Eine elektrische Wärmepumpe verbraucht elektrische Energie und nutzt daher, je nachdem aus welcher Quelle die elektrische Energie gewonnen wurde, fossile und/oder regenerative Energiequellen. Sie kann Wärme und/oder Kälte liefern, hat jedoch einen eingeschränkten Temperaturbereich. Üblicherweise kann eine Wärmepumpe eine maximale Vorlauftemperatur von 60°C bereitstellen. Sie ist gut regelbar und kann schnell auf hohe Leistungen hochgefahren und auch schnell wieder runtergefahren werden. Allerdings darf sie nicht häufig ein- beziehungsweise ausgeschaltet werden. Sie verursacht relativ niedrige Energiegesamtkosten.

Eine weitere Komponente, die in vielen Energieversorgungsanlagen verwendet wird ist ein Pufferspeicher. Der Pufferspeicher kann von Energieerzeugern bereitgestellte Energie zeitlich Zwischenspeichern. Je nach Energieform kann ein Pufferspeicher zum Beispiel ein Speicher für elektrische Energie beispielsweise in Form von Akkus oder Kondensatoren, oder ein Wärmespeicher und/oder Kältespeicher, beispielsweise in Form eines isolierten Wassertanks, sein. Außerdem kann Energie auch in Form von mechanischer Energie gespeichert werden, zum Beispiel in einem Schwungrad. Ein Pufferspeicher erlaubt das zumindest teilweise Entkoppeln des Betriebs der Energieerzeuger von den Energieverbrauchern. Hierdurch kann der Wirkungsgrad einer Energieversorgungsanlage verbessert werden.

Mindestens einer der Energieerzeuger der Energieversorgungsanlage kann dazu ausgelegt sein, gleichzeitig mindestens zwei Energieformen bereitzustellen. Ein Beispiel hierfür ist ein Blockheizkraftwerk (BHKW), das sowohl Wärme als auch elektrische Energie bereitstellen kann.

Das Verfahren kann zudem einen Schritt umfassen, bei dem ein zum gleichzeitigen Bereitstellen einer ersten Energieform und einer zweiten Energieform, zum Beispiel Wärme und elektrische Energie, ausgelegter erster Energieerzeugers ermittelt wird, für den eine Einschaltforderung der ersten Energieform und eine Ausschaltforderung der zweiten Energieform vorliegt, also dass beispielsweise eine Einschaltforderung für Wärme und eine Ausschaltforderung für elektrische Energie vorliegen. Der erste Energieerzeuger kann beispielsweise ein BHKW sein.

Ferner kann ein zum Bereitstellen der zweiten Energieform (beispielsweise elektrische Energie) ausgelegter zweiter Energieerzeugers ermittelt werden, für den eine Einschaltforderung der zweiten Energieform vorliegt. Die Steuereinrichtung kann dann dazu ausgelegt sein, eine Einschaltforderung der zweiten Energieform für den ersten Energieerzeuger und eine Ausschaltforderung der zweiten Energieform für den zweiten Energieerzeuger zu erzeugen. Der erste Energieerzeuger kann also die Einschaltforderung der zweiten Energieform vom zweiten Energieerzeuger übernehmen. Dies kann vorteilhafterweise insbesondere dann erfolgen, wenn der erste Energieerzeuger in einer Reihenfolge des Einschaltens für die zweite Energieform erst nach dem zweiten Energieerzeuger steht und somit eigentlich erst dann eingeschaltet werden würde, wenn der zweite Energieerzeuger bereits eingeschaltet ist. Da der erste Energieerzeuger aber bereits von der ersten Energieform eine Einschaltforderung erhalten hat, erkennt die Steuereinrichtung, dass ein Einschalten des zweiten Energieerzeugers vermieden werden kann, wenn die Energiebereitstellungsanforderung durch den ersten Energieerzeuger erfüllt werden kann.

Bei herkömmlichen Steuerverfahren für eine Vielzahl von Energieerzeugern einer Energieversorgungsanlage werden die einzelnen Energieerzeuger sequentiell entlang einer vorab festgelegten Reihenfolge ein- beziehungsweise ausgeschaltet. Das Einschalten des in der Reihenfolge nächsten Energieerzeugers erfolgt immer erst dann, wenn der momentane Energiebedarf nicht mehr durch die bereits eingeschalteten Energieerzeuger erfüllt werden kann. Entsprechend werden Energieerzeuger erst dann ausgeschaltet, wenn die bereitgestellte Energiemenge den angeforderten Bedarf überschreitet. Hierbei kann es dazu kommen, dass ein nur sehr langsam ein- beziehungsweise ausschaltbarer und/oder regelbarer Energieerzeuger ein Einschalten (oder Ausschalten) eines folgenden Energieerzeugers in der Reihenfolge blockiert, so dass eine sehr lange Zeit nötig sein kann, um einen Bedarf zu erfüllen beziehungsweise um bei einem verringerten Bedarf die Gesamtleistung zu drosseln.

Bei einem weiteren bekannten Steuerverfahren für eine Vielzahl von Energieerzeugern einer Energieversorgungsanlage werden die einzelnen Energieerzeuger unabhängig voneinander (parallel) ein- und/oder ausgeschaltet und geregelt. Die Steuerung erfolgt somit völlig unkoordiniert. Restriktionen beziehungsweise spezifische Eigenschaften einzelner Energieerzeuger können bei der Steuerung der Energieversorgungsanlage nicht berücksichtigt werden.

Das erfindungsgemäße Steuerverfahren kann eine sequentielle Steuerung mit einer parallelen Steuerung von Energieerzeugern kombinieren. Dazu werden die Energieerzeuger in Gruppen eingeteilt, wobei innerhalb einer Gruppe eine variable Reihenfolge der Energieerzeuger festgelegt wird. Ferner kann eine als Kaskade bezeichnete Reihenfolge von Gruppen festgelegt werden, wobei eine Kaskade eine oder mehrere Gruppen umfasst.

Eine Kaskade ist eine den Gruppen übergeordnete Ebene der Einteilung der Energieerzeuger und legt jeweils eine sequenzielle Reihenfolge des Einschaltens und/oder Ausschaltens von Energieerzeugern beziehungsweise Gruppen von Energieerzeugern fest. Kaskaden sind unabhängig voneinander steuerbar. Somit können mehrere parallel ausführbare sequenzielle Reihenfolgen von Energieerzeugern definiert werden, wobei jeweils unterschiedliche Kriterien für das Einschalten und/oder Ausschalten festgelegt werden können. Für jede Energieform kann eine eigene Einteilung und Reihenfolge von Energieerzeugern in Gruppen und Kaskaden festgelegt werden.

In jeder Gruppe wird eine Sequenz (Reihenfolge) von Energieerzeugern festgelegt, wobei die Sequenz, beispielsweise in Abhängigkeit von Regelgrößen der Energieerzeuger, variabel sein kann. So kann zum Beispiel ein Laufzeitausgleich zwischen mehreren Energieerzeugern einer Gruppe realisiert werden. Die Reihenfolge des Einschaltens und/oder Ausschaltens von Energieerzeugern innerhalb einer Kaskade kann in Abhängigkeit einer Reihenfolge der Gruppen und der Sequenzen innerhalb der Gruppen bestimmt werden.

Innerhalb jeder Kaskade kann autark entschieden werden, ob und nach welchen Kriterien Energieerzeuger entlang der Reihenfolge ein- und/oder ausgeschaltet werden sollen. Dazu kann für jede Kaskade eine Vielzahl von Kriterien festgelegt sein, die zum Beispiel Schwellenwerte in Abhängigkeit von Energiebereitstellungsanforderungen definieren.

Die Kaskaden können von der Steuereinrichtung parallel ausgeführt werden. Hierdurch kann die Regelgüte im Vergleich zu Verfahren, bei denen nur eine einzige lineare Sequenz von Energieerzeugern festgelegt werden kann, deutlich verbessert werden. Außerdem kann durch das parallele Ausführen von Kaskaden verhindert werden, dass die Schaltreihenfolge an einem Energieerzeuger hängen bleibt, bei dem ein Schaltvorgang verhindert wird. Die Regelgüte beschreibt das Verhalten einer Regelung. Eine hohe (oder gute) Regelgüte bedeutet hierbei, dass ein bestimmter geforderter Sollwert in besonders kurzer Zeit erreicht werden kann. Eine niedrige (oder schlechte) Regelgüte bedeutet, dass ein bestimmter geforderter Sollwert erst in einer relativ langen Zeit erreicht wird.

Bei einem bevorzugten Verfahren bestimmt die Steuereinrichtung für jeden Energieerzeuger Sollwerte zum Erfüllen der Energiebereitstellungsanforderung in Abhängigkeit der ermittelten Einschaltforderung(en) und/oder Ausschaltforderung(en) und gibt die Sollwerte an die Regeleinrichtungen der jeweiligen Energieerzeuger aus.

Die Steuereinrichtung kann vorzugsweise von jeder der Regeleinrichtungen Restriktionen bezüglich der Regelgrößen des jeweiligen Energieerzeugers erfassen, wobei die Restriktionen Minimal- und/oder Maximalwerte einer durch den Energieerzeuger bereitgestellten Leistung betreffen und/oder angeben, ob der betreffende Energieerzeuger eingeschaltet oder ausgeschaltet sein muss. Alternativ können die Restriktionen bezüglich der Regelgrößen von Energieerzeugern auch auf andere Weise als von einer Regeleinrichtung, beispielsweise manuell durch einen Benutzer, vorgegeben werden.

Diese Restriktionen können erzeugerspezifische Restriktionen sein. Als Restriktion können zum Beispiel ein Minimalwert und/oder ein Maximalwert vorgegeben werden. Ein Minimalwert und Maximalwert können auch gleich groß sein. Hierdurch kann ein Arbeitspunkt festgelegt werden, an dem ein Energieerzeuger betrieben werden soll. Ein solcher Arbeitspunkt kann beispielsweise einen besonders hohen Wirkungsgrad des Energieerzeugers sicherstellen. Durch das Erfassen der Restriktionen kann erreicht werden, dass die Steuereinrichtung in koordinierter Weise beim Bestimmen der Sollwerte zum Erfüllen der Energiebereitstellungsanforderungen auf Vorgaben durch die Energieerzeuger Rücksicht nimmt. Insbesondere kann vermieden werden, dass die Steuereinrichtung einen Sollwert für einen Energieerzeuger bestimmt, der aufgrund eigener Restriktionen diesen Sollwert nicht erfüllen kann.

Außerdem kann die Steuereinrichtung dafür ausgelegt sein, von jeder der Regeleinrichtungen spezifische Eigenschaften hinsichtlich einer Leistungsabgabe des jeweiligen Energieerzeugers zu erfassen, die angeben wie ein Energieerzeuger auf eine Regelgrößenänderung reagiert. Alternativ können die spezifischen Eigenschaften hinsichtlich der Leistungsabgabe eines Energieerzeugers auch auf andere Weise als durch Erfassen von einer Regeleinrichtung, beispielsweise manuell durch einen Benutzer, vorgegeben werden. Solche spezifische Eigenschaften können eine Kennlinie eines Energieerzeugers darstellen, die beispielsweise angibt, welche Leistung der Energieerzeuger ausgibt, wenn eine bestimmte Stellgröße eingestellt wird. Die spezifischen Eigenschaften können insbesondere dynamische Eigenschaften des Energieerzeugers betreffen. Zum Beispiel können sie beschreiben, wie viel Zeit ein Energieerzeuger benötigt, um auf Volllast (maximale Leistungsabgabe) hochgefahren zu werden, beziehungsweise wie lange es dauert, um den Energieerzeuger auszuschalten (keine Leistungsabgabe).

Eine spezifische Eigenschaft eines Energieerzeugers kann außerdem von einer hydraulischen Anbindung des Energieerzeugers in der Energieversorgungsanlage abhängen. So kann erreicht werden, dass Energieerzeuger gemäß ihrer physischen Anordnung in der Energieversorgungsanlage angesteuert werden. Hierdurch kann die beispielsweise das Erfüllen einer Anforderung zum Bereitstellen einer bestimmten Vorlauftemperatur vereinfacht werden.

Eine spezifische Eigenschaft eines Energieerzeugers gemäß der Erfindung kann ferner die von ihm bereitgestellte(n) Energieform(en) sein. Außerdem kann die spezifische Eigenschaft der von dem Energieerzeuger verwendete Energieträger sein und/oder von der Art des verwendeten Energieträgers abhängen.

Vorzugsweise kann das Verfahren einen Schritt umfassen, bei dem bestimmt wird, ob eine Energiebereitstellungsanforderung für mehr als eine der Energieformen Wärme, Kälte oder elektrische Energie besteht. Dann kann eine Einteilung der Kaskaden in Abhängigkeit der durch die Energieerzeuger bereitgestellten Energieform festgelegt werden. Das Regeln der Energieerzeuger erfolgt dann durch die Steuereinrichtung in Abhängigkeit der Energieformen festgelegten Einteilung der Energieerzeuger in Kaskaden.

Das Verfahren kann zudem einen Schritt umfassen, in dem bestimmt wird, ob für einen Energieerzeuger mehr als eine Energiebereitstellungsanforderung vorliegt. Falls für einen Energieerzeuger mehr als eine Energiebereitstellungsanforderung vorliegt, kann die Steuereinrichtung bestimmen, welche Energiebereitstellungsanforderung prioritär behandelt werden soll. Die Sollwerte werden dann für den einen Energieerzeuger in Abhängigkeit der prioritären Energiebereitstellungsanforderung bestimmt. Die Priorisierung der Energiebereitstellungsanforderungen kann beispielsweise in Abhängigkeit der angeforderten Energieform erfolgen.

Vorzugsweise umfasst die Steuereinrichtung eine Einrichtung zum Erfassen von Restriktionen. Die Restriktionen können Minimal- und/oder Maximalwerte einer durch einen Energieerzeuger bereitgestellten Leistung betreffen und/oder angeben, ob der betreffende Energieerzeuger eingeschaltet oder ausgeschaltet sein muss.

Die Steuereinrichtung kann ferner eine Koordiniereinheit umfasst, die dazu ausgelegt ist, Ein- und/oder Ausschaltforderungen und/oder Sollwertvorgaben aus den Energieformen gemäß einer Priorisierung der Energieformen an die Sollwertausgabeeinrichtung auszugeben. Dazu kann die Koordiniereinheit dafür ausgelegt sein, für jede Energieform eine Priorität festzulegen, so dass jede Energieform eine unterschiedlich hohe Priorität erhält. Hierdurch können Konflikte bei Vorliegen gegensätzlicher Ein- oder Ausschaltforderungen an einen Energieerzeuger aufgelöst werden. Übernommen wird dann jeweils die Ein/ oder Ausschaltforderung, welche von einer Energieform mit höherer Priorität erzeugt wurde.

Erfindungsgemäß kann die Energieversorgungsanlage dafür ausgelegt sein, Energie in Form von Wärme, Kälte und/oder elektrischer Energie bereitzustellen. Für jede Energieform kann mindestens eine Energiebereitstellungsanforderung vorliegen. Energiebereitstellungsanforderungen können für jede Energieform unabhängig voneinander durch die Steuerungseinrichtung erfasst werden und in entsprechende Sollwert-Forderungen an Energieerzeuger weiterverarbeitet werden. Eine Energiebereitstellungsanforderung kann beispielsweise von einem Verbraucher, einer Vielzahl von Verbrauchern oder einer externen oder internen Vorrichtung kommen, die Anforderungen einer Vielzahl von Verbrauchern koordiniert. Für jede Energieform können außerdem Kriterien für Energieerzeuger, die der entsprechenden Energieform zugeordnet sind, festgelegt werden. Energiebereitstellungsanforderungen für jede Energieform können unabhängig voneinander durch die Steuerungseinrichtung erfasst werden und in entsprechende Sollwertvorgaben an Energieerzeuger weiterverarbeitet werden.

Ferner kann für eine Energieform auch mehr als eine Energiebereitstellungsanforderung vorliegen. Hierzu können einen oder mehrere Energieform(en), beispielsweise in Abhängigkeit der Anbindung der Energieerzeuger und/oder der in den Verbraucherkreisläufen vorhandenen Verbraucherarten, unterteilt werden. Dies kann zum Beispiel dazu dienen, um die (physikalische) Energieform Wärme an verschiedene Verbraucherkreisläufe mit unterschiedlichen Anforderungen zu liefern. Die von der Energiebereitstellungsanforderung betroffenen Energieerzeuger können hierbei auch an voneinander getrennte Verbraucherkreisläufe angebunden sein. Alternativ kann mittels Ventilen, Drosselklappen und/oder Schaltern zwischen verschiedenen Verbraucherkreisläufen umgeschaltet werden.

Für die Energieform Wärme können beispielsweise dann verschiedene Energiebereitstellungsanforderungen vorliegen, wenn für die Warmwasserbereitstellung (Trinkwasser) und Heizung und/oder Prozesswärme (Brauchwasser beziehungsweise Dampf) unterschiedliche Vorlauftemperaturen angefordert werden.

Die Einteilung in die Energieformen Wärme, Kälte und elektrische Energie kann auch durch weitere Energieformen (Beispielsweise mechanische Energie) ergänzt werden. Ferner kann eine Energieform auch nutzungsabhängig in Unterenergieformen unterteilt werden. Beispielsweise kann die Energieform Wärme in Warmwasser, Heizungswärme und/oder Warmluft unterteilt werden. Die Energieform Kälte kann beispielsweise in eine Gebäudekühlung (zum Beispiel Klimaanlage mit Frischluftzufuhr) und eine Gerätekühlung (zum Beispiel Kühlmittel zur Kühlung von Maschinen) unterteilt werden. Entsprechend kann eine Prioritätsreihenfolge für Unterenergieformen innerhalb einer Energieform und/oder für alle Energieformen und Unterenergieformen festgelegt werden.

Da es in der Energieversorgungsanlage Energieerzeuger geben kann, die gleichzeitig mehr als eine Energieform bereitstellen können, kann es nötig sein, festzulegen, unter welchen Voraussetzungen solche Energieerzeuger ein- beziehungsweise ausgeschaltet und/oder geregelt oder gesteuert werden sollen. Die Steuereinrichtung kann bei der Steuerung der Energieerzeuger bestimmte Energieformen priorisieren, so dass eine Energiebereitstellungsanforderung beziehungsweise Einschaltforderungen und/oder Ausschaltforderungen für eine erste Energieform gegenüber einer Energiebereitstellungsanforderung beziehungsweise Einschaltforderungen und/oder Ausschaltforderungen einer zweiten Energieform bevorzugt behandelt wird. Die Steuereinrichtung kann auch eine Prioritäts-Reihenfolge für die Energieformen festlegen oder erfassen. Die Prioritäts-Reihenfolge kann beispielsweise manuell von einem Benutzer festgelegt werden. Die Steuereinrichtung kann also Energiebereitstellungsanforderungen beziehungsweise Einschaltforderungen und/oder Ausschaltforderungen in Abhängigkeit der Priorität betreffenden Energieform erfassen und verarbeiten.

Beispielsweise liefert ein BHKW sowohl Wärme als auch elektrische Energie (elektrischer Strom und/oder elektrische Spannung). Folglich können für ein BHKW zwei unterschiedliche Forderungen aus den beiden Energieformen vorliegen. Da die vom BHKW bereitgestellte elektrische Energie aber bei Nichtvorliegen einer entsprechenden Forderung der durch die Energieversorgungsanlage versorgten Verbraucher jederzeit in ein öffentliches Stromnetz eingespeist werden kann, wird das BHKW üblicherweise im Dauerbetrieb eingesetzt.

Die Energieform Wärme umfasst alle Energieerzeuger, die Wärmeenergie bereitstellen können. Zudem berücksichtigt die Steuereinheit für die Energieform Wärme Bedingungen zum Einschalten und/oder Ausschalten, die einen Bezug zu einer Energiebereitstellungsanforderung von Wärme haben, zum Beispiel eine geforderte Anlagenvorlauftemperatur und/oder eine Puffertemperatur. In ähnlicher Weise werden Energieerzeuger den Energieformen elektrische Energie und Kälte zugeordnet.

Jeder Energieerzeuger in der Energieversorgungsanlage weist eine Regeleinrichtung zum Regeln von Regelgrößen des Energieerzeugers auf. Regelgrößen eines Energieerzeugers umfassen beispielsweise eine Kesseltemperatur des Energieerzeugers, einen Volumen- und/oder Massenstrom eines Trägermediums durch den Energieerzeuger, eine Temperatur des Trägermediums am Vorlauf und/oder am Rücklauf des Energieerzeugers, eine Leistungsaufnahme des Energieerzeugers und/oder eine Leistungsabgabe des Energieerzeugers. Bei einem Energieerzeuger, der elektrische Energie bereitstellt, können die Regelgrößen einen elektrischen Strom, eine elektrische Leistung und/oder eine elektrische Spannung betreffen.

Die Regeleinrichtungen werden von einer Steuereinrichtung koordiniert, die den Regeleinrichtungen übergeordnet ist. Die Steuereinrichtung ist dafür ausgelegt, eine Energiebereitstellungsanforderung für Energie in Form von Wärme und/oder Kälte und/oder elektrischer Energie zu erfassen. Eine Energiebereitstellungsanforderung kann beispielsweise eine Anforderung zum Bereitstellen einer bestimmten Vorlauftemperatur oder eine bestimmte Temperatur in einem Pufferspeicher, insbesondere in einem bestimmten Bereich des Pufferspeichers, sein oder eine elektrische Leistung sein. Die Energiebereitstellungsanforderung kann beispielsweise von einem Verbraucher oder einem Verbund von Verbrauchern erzeugt werden und über eine geeignete Datenkommunikationsverbindung an die Steuereinrichtung ausgegeben werden.

Die Steuereinrichtung kann ferner dafür ausgelegt sein, für jeden Energieerzeuger Sollwerte zum Erfüllen der Energiebereitstellungsanforderung in Abhängigkeit des jeweils genutzten Energieträgers zu bestimmen, wobei die Sollwerte auch Anweisungen zum Einschalten oder Ausschalten eines Energieerzeugers umfassen.

Die Steuereinrichtung ist ferner dafür ausgelegt, die Sollwerte an die Regeleinrichtungen auszugeben. Zum Kommunizieren mit den Regeleinrichtungen nutzt die Steuereinrichtung eine geeignete Datenkommunikationsverbindung.

Die verschiedenen in der Energieversorgungsanlage genutzten Energieträger können beispielsweise aufgrund unterschiedlicher Kosten und/oder schwankender Verfügbarkeit Anforderungen an die Energieversorgungsanlage stellen. Um einen möglichst ununterbrochenen Betrieb der Energieversorgungsanlage sicherzustellen, ermittelt die Steuereinrichtung die Sollwerte für die Energieerzeuger, zum Beispiel in Abhängigkeit der aktuellen und/oder auch einer für die Zukunft berechneten, vorgegebenen oder geschätzten Verfügbarkeit der genutzten Energieträger.

Beispielsweise kann die Steuereinrichtung dafür ausgelegt sein, bevorzugte Energieerzeuger, die zum Beispiel besonders kostengünstige und/oder regenerative Energieträger nutzen, mit hoher beziehungsweise maximaler Leistung zu betreiben. Nicht bevorzugte Energieerzeuger, die zum Beispiel weniger kostengünstige und/oder fossile Energieträger nutzen und zur Abdeckung der Lastspitzen vorgesehen sind, sollen nicht zum Speichern von Wärme in einem Pufferspeicher eingesetzt werden. Vorzugsweise sollen die bevorzugten Energieerzeuger den Pufferspeicher nutzen dürfen, um höhere Laufzeiten beziehungsweise weniger Schaltvorgänge zu realisieren. Die Steuereinrichtung kann aber auch nicht bevorzuge Energieerzeuger zum Laden eines Pufferspeichers auswählen.

Alleine das gezielte Ein- und Ausschalten von Energieerzeugern durch die Steuereinrichtung wäre nicht ausreichend, um die Energiebereitstellungsanforderung zu erfüllen, denn durch das Schalten alleine wird nicht definiert, mit welchem Modulationsgrad beziehungsweise mit welcher Leistung (oder bei welchem Temperaturniveau) der freigegebene Energieerzeuger arbeiten soll. Hieraus folgt, dass Sollwertvorgaben durch die Steuereinrichtung erforderlich sind.

Die unterschiedlichen Regelgrößen einer Energieversorgungsanlage (zum Beispiel Anlagenvorlauftemperatur, Puffertemperatur, elektrischer Strom, elektrische Spannung), erfordern, dass individuelle Sollwertvorgaben an die einzelnen Energieerzeuger ausgegeben werden. Daneben sollen auch Randbedingungen berücksichtigt werden. Diese Randbedingungen können zum Beispiel Regelstrategien, festgelegte bevorzugte Energieerzeuger und/oder eine Pufferdynamik umfassen.

Das gezielte Freigeben von Energieerzeugern ist nicht ausreichend, um beispielsweise eine Anlagenvorlauftemperatur und/oder eine Puffertemperatur auf ein gewünschtes Niveau mit einer erforderlichen Leistung zu regeln. Denn durch die Freigabe wird nicht definiert, welche Leistung bei welchem Temperaturniveau der jeweils freigegebene Energieerzeuger liefern soll. Daher sind zusätzliche Sollwertvorgaben erforderlich. In einer Energieversorgungsanlage können unterschiedliche Energieerzeuger mit individuellen erzeugerspezifischen Restriktionen (zum Beispiel Minimal- und Maximalwerte der Leistung, des Volumenstroms oder der Laufzeiten) vertreten sein. Zusätzlich erlauben die umfangreichen Konfigurationsmöglichkeiten, dass Energieerzeuger auf jeweils unterschiedliche Regelgrößen (zum Beispiel Anlagenvorlauftemperatur, Pufferladezustand, elektrischer Strom, elektrische Spannung) arbeiten. Diese Umstände erfordern, dass jeder Energieerzeuger neben der Freigabe oder Schaltforderung individuelle Sollwerte erhält.

Vorzugsweise weist jede Regeleinrichtung eines jeden Energieerzeugers eine Schnittstelle auf, um Sollwerte von der Steuereinrichtung zu empfangen. Die Regeleinrichtungen wirken über geeignete Aktoren auf die Energieerzeuger ein, um die Regelgrößen auf den entsprechenden Sollwert zu regeln. Die Regelgrößen umfassen beispielsweise: eine (elektrische oder Wärme- oder Kühl-) Leistung, die der Energieerzeuger in die Energieversorgungsanlage einbringt, einen Volumen- oder Massenstrom (oder elektrischer Strom) vom Energieerzeuger in die Energieversorgungsanlage, eine Energieerzeugervorlauftemperatur (eine elektrische Spannung).

Die Steuereinrichtung kann nicht direkt auf diese Regelgrößen wirken, sondern gibt lediglich Sollwerte an eine Regeleinrichtung des Energieerzeugers aus. Das Regeln der Regelgrößen auf die Sollwerte bleibt im Verantwortungsbereich der Regeleinrichtungen. Die Steuereinrichtung kann einer Regeleinrichtung anstatt eines festen Sollwerts auch einen Arbeitsbereich (jeweils durch eine obere und untere Restriktion beziehungsweise einen Schwellenwert) vorgeben, in dem die Regelgrößen von der Regeleinrichtung eingestellt werden können. Ein von der Steuereinrichtung festgelegter Arbeitsbereich kann dementsprechend durch einen oder mehrere Sollwerte definiert werden, welche Minimal- und/oder Maximalwerte für die Regelgrößen festlegen. Regelgrößen sind zum Beispiel:
Eine maximale thermische oder elektrische Leistung (beziehungsweise Wärmeleistung, Kälteleistung) des Energieerzeugers, die nicht überschritten werden darf. Die Forderung erfolgt zum Beispiel in Prozent in Relation zur physikalisch möglichen Maximalleistung des betroffenen Energieerzeugers.

Eine minimale thermische oder elektrische Leistung (beziehungsweise Wärmeleistung oder Kälteleistung) des Energieerzeugers, die nicht unterschritten werden darf. Die Forderung erfolgt zum Beispiel in Prozent in Relation zur physikalisch möglichen Maximalleistung des betroffenen Energieerzeugers.

Ein maximaler Volumenstrom (oder Massenstrom oder elektrischer Strom) des Energieerzeugers, der vom beziehungsweise durch den Energieerzeuger in die Energieversorgungsanlage fließt. Die Forderung erfolgt zum Beispiel in Prozent in Relation zum physikalisch möglichen maximalen Strom des betreffenden Energieerzeugers.

Ein minimaler Volumenstrom (oder Massenstrom oder elektrischer Strom) des Energieerzeugers, der vom beziehungsweise durch den Energieerzeuger in die Energieversorgungsanlage fließt. Die Forderung erfolgt zum Beispiel in Prozent in Relation zum physikalisch möglichen maximalen Strom des betreffenden Energieerzeugers.

Eine minimale und/oder maximale Energieerzeugervorlaufsolltemperatur oder elektrische Spannung. Die Forderung erfolgt in Grad Celsius beziehungsweise Volt. Die konkreten Werte, die die Steuereinrichtung an die Regeleinrichtungen der Energieerzeuger sendet, werden im Folgenden auch als Sollwerte bezeichnet.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- **Figur 1**: eine Darstellung einer Steuerungslogik einer Energieversorgungsanlage gemäß einem ersten Ausführungsbeispiel.
- **Figur 2**: eine Darstellung einer Steuerungslogik einer Energieversorgungsanlage mit fünf Energieerzeugern für drei Energieformen gemäß einem zweiten Ausführungsbeispiel.
- **Figur 3**: ein Hydraulikschema einer Energieversorgungsanlage gemäß einem dritten Ausführungsbeispiel mit zwei BHKW, einem Pufferspeicher und zwei Gaskesseln.
- **Figur 4**: eine Einteilung der Energieerzeuger des dritten Ausführungsbeispiels in Energieformen, Kaskaden und Gruppen.
- **Figur 5**: ein viertes Ausführungsbeispiel, das eine Abwandlung der Einteilung der Energieerzeuger des dritten Ausführungsbeispiels in Energieformen, Kaskaden und Gruppen des dritten Ausführungsbeispiels darstellt.
- **Figur 6**: ein Hydraulikschema einer Energieversorgungsanlage gemäß einem siebten Ausführungsbeispiel mit zwei Gaskesseln, zwei BHKW, einem Pufferspeicher und zwei Holzkesseln.
- **Figur 7**: eine Einteilung der Energieerzeuger des siebten Ausführungsbeispiels in Kaskaden und Gruppen.
- **Figur 8**: ein Beispiel für eine Forderungsmatrix.
- **Figur 9**: illustriert ein Konzept der bedarfsgerechten Übernahme von Energieerzeugern mit Einschaltindikatoren gemäß einem Modus "geringe Taktreduzierung".
- **Figur 10**: illustriert ein Konzept der bedarfsgerechten Übernahme von Energieerzeugern mit Einschaltindikatoren gemäß einem Modus "hohe Taktreduzierung".

### Ausführliche Beschreibung von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

### Erstes Ausführungsbeispiel

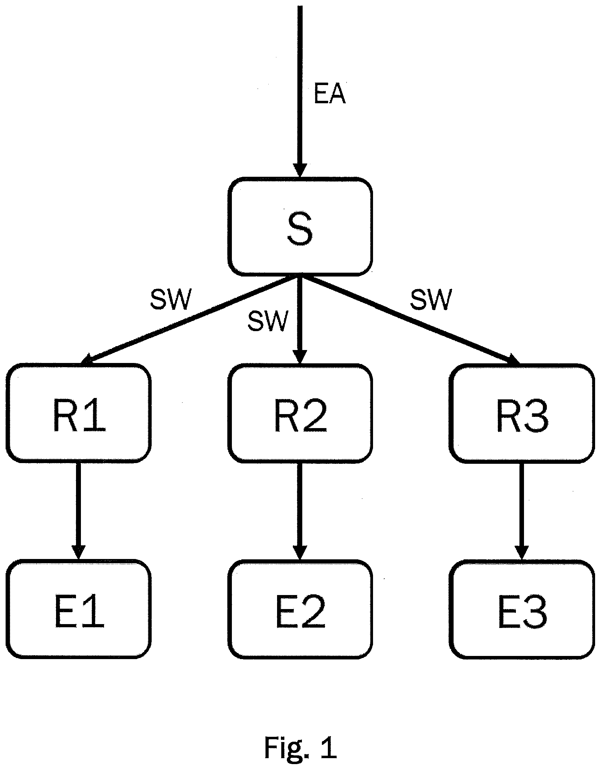

Figur 1 zeigt einen schematischen Aufbau einer Steuereinrichtung S zum Steuern einer Energieversorgungsanlage gemäß einem ersten Ausführungsbeispiel. Die Energieversorgungsanlage ist vorzugsweise eine multivalente Energieversorgungsanlage, deren Energieerzeuger E1-E3 insgesamt mindestens zwei verschiedene Energieträger nutzen. Die in Figur 1 dargestellte Energieversorgungsanlage weist drei Energieerzeuger E1-E3 auf, die Energie in Form von Wärme F1 und/oder Kälte F3 und/oder elektrischer Energie F2 bereitstellen.

Die Energieversorgungsanlage weist eine Steuereinrichtung S auf, die dafür ausgelegt ist, mindestens eine Energiebereitstellungsanforderung EA zum Bereitstellen von Energie in Form von Wärme F1 und/oder Kälte F3 und/oder elektrischer Energie F2 zu erfassen. Die mindestens eine Energiebereitstellungsanforderung EA kann zum Beispiel von einer Vielzahl von Verbrauchern (nicht dargestellt) erzeugt, durch einen Benutzer manuell vorgeben oder von einer übergeordneten Vorrichtung, die mit der Steuereinrichtung kommuniziert, erzeugt werden. Die Steuereinrichtung S ermittelt Sollwerte für die Vielzahl von Energieerzeugern E1-E3 der Energieversorgungsanlage in Abhängigkeit der mindestens einen Energiebereitstellungsanforderung EA und gibt die Sollwerte SW an Regeleinrichtungen R1-R3 der Energieerzeugern E1-E3 aus.

Auch wenn das in Figur 1 dargestellte Ausführungsbeispiel der Energieversorgungsanlage drei Energieerzeuger E1-E3 umfasst, so ist die Erfindung nicht darauf beschränkt, dass die Energieversorgungsanlage nur drei Energieerzeuger E1-E3 aufweist. Vielmehr kann eine beliebig hohe Anzahl von Energieerzeugern durch eine erfindungsgemäße Steuereinrichtung S, beziehungsweise unter Verwendung eines der erfindungsgemäßen Verfahren gesteuert werden.

Die Steuereinrichtung S ist dafür ausgelegt, für jede Energieform F1-F3 zu ermitteln, welche Energieerzeuger E1-E3 zum Erfüllen der mindestens einen Energiebereitstellungsanforderung EA erforderlich sind. Das Ermitteln kann in Abhängigkeit der durch die mindestens eine Energiebereitstellungsanforderung EA angeforderten Energiemenge und der durch die Energieerzeuger E1-E3 bereitstellbaren Leistung erfolgen.

Für jede Energieform F1-F3 erzeugt die Steuereinrichtung S Einschaltforderungen EIN für die zum Erfüllen der mindestens einen Energiebereitstellungsanforderung EA erforderlichen Energieerzeuger E1-E3. Ferner erzeugt die Steuereinrichtung S für jede Energieform F1-F3 Ausschaltforderungen AUS für die zum Erfüllen der mindestens einen Energiebereitstellungsanforderung EA nicht erforderlichen Energieerzeuger E1-E3.

Für jeden Energieerzeuger E1-E3 ermittelt die Steuereinrichtung S, ob eine, mehrere oder keine Einschaltforderung EIN vorliegen und ob eine, mehrere oder keine Ausschaltforderung AUS vorliegen.

In einem ersten Betriebsmodus "EIN vor AUS" gibt die Steuereinrichtung S für jeden Energieerzeuger E1-E3, für den mindestens eine Einschaltforderung EIN vorliegt, eine Einschaltforderung EIN an die entsprechende Regeleinrichtung R1-R3 aus. Für jeden Energieerzeuger E1-E3, für den keine Einschaltforderung EIN und mindestens eine Ausschaltforderung AUS vorliegt, gibt die Steuereinrichtung S eine Ausschaltforderung AUS an die entsprechende Regeleinrichtung R1-R3 aus.

In einem zweiten Betriebsmodus "AUS vor EIN" gibt die Steuereinrichtung S für jeden Energieerzeuger E1-E3, für den mindestens eine Einschaltforderung AUS vorliegt, eine Ausschaltforderung AUS an die entsprechende Regeleinrichtung R1-R3 aus. Für jeden Energieerzeuger E1-E3, für den keine Ausschaltforderung AUS und mindestens eine Einschaltforderung EIN vorliegt, gibt die Steuereinrichtung S eine Einschaltforderung EIN an die entsprechende Regeleinrichtung R1-R3 aus.

In einem dritten Betriebsmodus legt die Steuereinrichtung S für jede Energieform F1-F3 eine Priorität, so dass jede Energieform F1-F3 eine unterschiedlich hohe Priorität erhält. Beispielsweise kann Wärme F1 die höchste, elektrischer Strom F2 eine mittlere und Kälte F3 die niedrigste Priorität erhalten. Für jeden Energieerzeuger E1-E3, für den jeweils mindestens eine Einschaltforderung EIN und mindestens eine Ausschaltforderung AUS von unterschiedlichen Energieformen F1-F3 vorliegen, wird diejenige Ein- oder Ausschaltforderung der Energieform mit der höchsten Priorität bestimmt. Die Steuereinrichtung S gibt die Einschaltforderung EIN oder Ausschaltforderung AUS, die von der Energieform F1-F3 mit der höheren Priorität erzeugt wurde, an die entsprechende Regeleinrichtung R1-R3 aus.

Wenn für einen Energieerzeuger E1, der zum Beispiel ein Blockheizkraftwerk (BHKW) ist, das gleichzeitig sowohl Wärme F1 als auch elektrischen Strom F2 bereitstellen kann, eine Einschaltforderung EIN für elektrischen Strom F2 und eine Ausschaltforderung AUS für Wärme F1 vorliegen, wird gemäß der beispielhaften Prioritätseinteilung eine Ausschaltforderung AUS an die Regeleinrichtung R1 ausgegeben.

Die Steuereinrichtung S ist ferner dazu ausgelegt, für jeden Energieerzeuger E1-E3 Sollwerte SW zum Erfüllen der mindestens einen Energiebereitstellungsanforderung EA in Abhängigkeit der ermittelten Einschaltforderung(en) EIN und/oder Ausschaltforderung(en) AUS zu bestimmen und die Sollwerte SW an die Regeleinrichtungen R1-R3 auszugeben.

Erfasst die Steuereinrichtung S Energiebereitstellungsanforderungen EA zum gleichzeitigen Bereitstellen von Wärme F1 und elektrischen Strom F2, so kann die SteuereinrichtungS einen zum gleichzeitigen Bereitstellen der ersten Energieform Wärme F1 und der zweiten Energieform elektrischer Strom F2 ausgelegten ersten Energieerzeuger ermitteln, zum Beispiel das zuvor genannte BHKW E1.

Beispielsweise liegen für das BHKW E1 sowohl eine Ausschaltforderung AUS von der ersten Energieform Wärme F1 als auch eine Einschaltforderung EIN von der zweiten Energieform elektrischer Strom F2 vor. Ferner ermittelt die Steuereinrichtung S, dass für einen zweiten Energieerzeuger E2, der zum Bereitstellen von Wärme F1 ausgelegt ist, beispielsweise ein Gaskessel E2, eine Einschaltforderung EIN der ersten Energieform F1 vorliegt.

In diesem Fall erkennt die Steuereinrichtung S, dass das BHKW E1 die Energiebereitstellungsanforderung EA sowohl für Wärme F1 als auch elektrischen Strom F2 erfüllen kann und bereits zum Bereitstellen von elektrischem Strom eingeschaltet ist. Ein Einschalten des Gaskessels E2 kann hier vermieden werden. Daher erzeugt die Steuereinrichtung S eine Einschaltforderung EIN der ersten Energieform Wärme F1 für das BHKW E1 und eine Ausschaltforderung AUS der ersten Energieform Wärme F1 für den Gaskessel E2 und gibt diese Schaltforderungen an die entsprechenden Regeleinrichtungen R1-R2 aus. Das BHKW E1 stellt dann die angeforderte Energie in Form von Wärme F1 und elektrischen Strom F2 bereit. Der Gaskessel E2 muss gar nicht erst angeschaltet werden.

Die Steuereinrichtung S führt das erfindungsgemäße Steuerverfahren vorzugsweise periodisch zu vorgegebenen diskreten Zeitpunkten k aus. Gemäß einem vierten Betriebsmodus ermittelt die Steuereinrichtung einen ersten Energieerzeuger E1, der zum gleichzeitigen Bereitstellen einer ersten Energieform Wärme F1 und einer zweiten Energieform elektrischer Strom F2 ausgelegt ist. Hierbei kann es sich wiederum um das BHKW E1 des oben-beschriebenen Beispiels handeln. Für das BHKW E1 lag zu einem vergangenen Zeitpunkt k-1 eine Einschaltforderung EIN von der zweiten Energieform elektrischer Strom F2 und eine Ausschaltforderung AUS von der ersten Energieform Wärme F1 vor. Aufgrund der Einschaltforderung EIN der zweiten Energieform F2 war das BHKW E1 in Betrieb. In Bezug auf die erste Energieform F1 hatte das BHKW E1 den Status "fremdangefordert". Fremdanforderungen von Energieerzeugern werden im Zusammenhang mit dem sechsten Ausführungsbeispiel noch näher beschrieben. Zum gegenwärtigen Zeitpunkt k hat die Steuereinrichtung eine Ausschaltforderung AUS an das BHKW E1 für die zweite Energieform F2 erzeugt. Falls weiterhin auch eine Ausschaltforderung AUS von der ersten Energieform Wärme F1 vorliegt, so würde das BHKW E1 ausgeschaltet werden, da nun für beide Energieformen Wärme F1 und elektrischer Strom F2, die das BHKW E1 bereitstellen kann, eine Ausschaltforderung AUS vorliegen würden.

Wenn der Steuereinrichtung S aber zum aktuellen Zeitpunkt k eine Energiebereitstellungsanforderung EA zum Bereitstellen der ersten Energieform Wärme F1 vorliegt, so kann die Steuereinrichtung S erkennen, dass es vorteilhaft ist, eine Einschaltforderung EIN für das BHKW E1 für die Energieform F1 zu erzeugen. Das BHKW E1 ist nämlich bereits wegen einer zuvor erzeugten Einschaltforderung EIN der Energieform F2 in Betrieb und muss nicht erst eingeschaltet werden. Es könnte also ein Schaltvorgang für das BHKW E1 vermieden werden. Diese Übernahme des BHKWs E1 von der Energieform Wärme F1 kann insbesondere auch dann erfolgen, wenn das BHKW E1 in einer Schaltreihenfolge der Energieform Wärme F1 gar nicht an der Reihe gewesen wäre, sondern ein zweiter Energieerzeuger, zum Beispiel der Gaskessel E2. Es kann also ein Ausschalten des BHKWs E1 und ein Einschalten des Gaskessels E2 verhindert werden.

Das oben beschriebene Erzeugen der Einschaltforderung EIN der ersten Energieform Wärme F1 für das BHKW E1 kann auch in Abhängigkeit eines sogenannten Einschaltindikators erfolgen. Ein Einschaltindikator für den Energieerzeuger E1 ist ein weiterer Energieerzeuger E2-E3, dem ebenfalls eine Einschaltforderung EIN für dieselbe Energieform erteilt wird. Im vorliegenden Beispiel kann dies der Gaskessel E2 sein, der ebenfalls Wärme F1 bereitstellen kann. Wenn für den Gaskessel E2 zum vorhergehenden Zeitpunkt k-1 eine Ausschaltforderung AUS von der ersten Energieform Wärme F1 vorlag und nun zum gegenwärtigen Zeitpunkt k eine Einschaltforderung EIN von der ersten Energieform Wärme F1 erteilt wird, so wird, wie oben beschrieben die Einschaltforderung EIN auf das BHKW E1 übertragen. Die erzeugte Einschaltforderung EIN an den Gaskessel E2 ist ein Indikator dafür, dass mehr Wärme F1 bereitgestellt werden soll. Daher wird der Gaskessel E2 hier als Einschaltindikator für das BHKW E1 bezeichnet.

Die Steuereinrichtung S kann für jede Energieform F1-F3 jeweils eine Reihenfolge des Einschaltens und/oder Ausschaltens der Energieerzeuger E1-E3 erfassen oder auch selbst festlegen. Das Bestimmen der Einschaltforderungen EIN und/oder Ausschaltforderungen AUS erfolgt dann in Abhängigkeit der Reihenfolge. Wie oben geschildert kann die Steuereinrichtung S aber auch entscheiden, dass Energieerzeuger E1-E3 in der Reihenfolge übersprungen werden, wenn dadurch ein Schaltvorgang vermieden werden kann.

### Zweites Ausführungsbeispiel

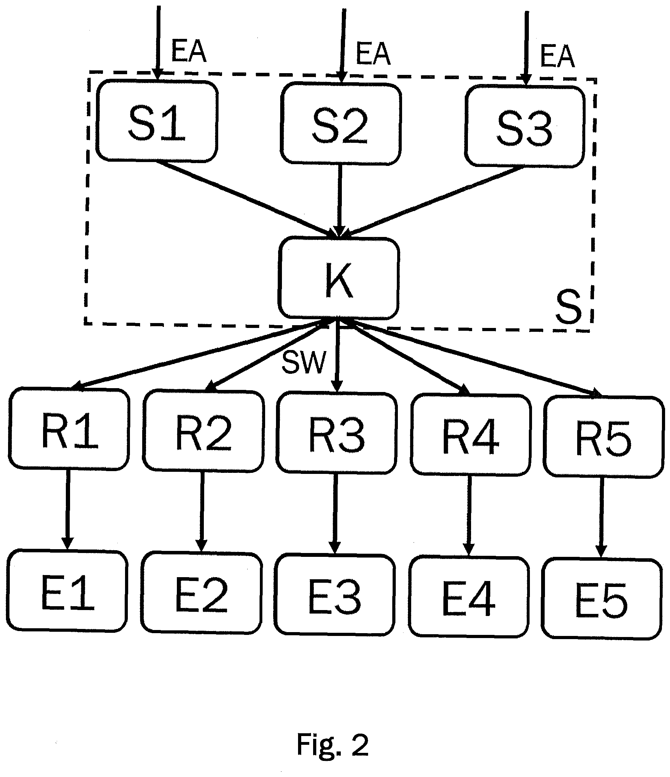

Figur 2 zeigt ein zweites Ausführungsbeispiel einer Energieversorgungsanlage mit fünf Energieerzeugern E1-E5. Im Folgenden werden nur Unterschiede des zweiten Ausführungsbeispiels zum ersten Ausführungsbeispiel näher beschrieben. Die Steuereinrichtung S umfasst hier drei Steuereinheiten S1-S3 und eine Koordiniereinheit K. Die Steuereinheiten S1-S3 erfassen jeweils eine Energiebereitstellungsanforderung EA für je eine Energieform F1-F3.

Zum Beispiel kann die erste Steuereinheit S1 eine Energiebereitstellungsanforderung EA in Form einer Wärmeanforderung, die zweite Steuereinheit S2 eine Energiebereitstellungsanforderung EA in Form einer Anforderung zum Bereitstellen elektrischer Energie und die dritte Steuereinheit S3 eine Energiebereitstellungsanforderung EA in Form einer Kälteanforderung erfassen. Da es Energieerzeuger E1-E5 in der Energieversorgungsanlage geben kann, die mehr als eine Energieform F1-F2 bereitstellen, wie zum Beispiel ein Blockheizkraftwerk, das elektrische Energie F2 und Wärme F1 bereitstellt, kann es sein, dass die Steuereinrichtung S Energiebereitstellungsanforderungen EA für verschiedene Energieformen F1-F3 erfasst, die denselben Energieerzeuger E1-E5 betreffen.

Die Koordiniereinheit K ist dafür ausgelegt, die durch die drei Steuereinheiten S1-S3 erfassten Energiebereitstellungsanforderungen EA und die daraus bestimmten Sollwerte auf Konflikte zu überprüfen und den Einsatz der Energieerzeuger E1-E5 entsprechend zu koordinieren. Hierzu können den einzelnen Energieformen F1-F3 zum Beispiel unterschiedliche Prioritäten eingeräumt werden. In einer Energieversorgungsanlage mit einem oder mehreren BHKW wäre es zum Beispiel sinnvoll, Anforderungen zum Bereitstellen elektrischer Energie F2 prioritär zu behandeln, damit die BHKW nicht ausgeschaltet werden wenn (zeitweise) keine Anforderung zum Bereitstellen von Wärme F1 vorliegt und daher eine Ausschaltforderung für Wärme F1 erzeugt wird.

Die Koordiniereinheit K ist dafür ausgelegt, das Zusammenspiel zwischen den verschiedenen Energieformen F1-F3 zu regeln. Energieerzeuger E1-E5, die mehrere Energieformen F1-F3 bereitstellen und eine Einschaltforderung EIN bezüglich einer ersten Energieform F1-F3, zum Beispiel Strom F2 erhalten, sollen beispielsweise aufgrund von Energiebereitstellungsanforderungen EA für eine zweite Energieform F1-F3, zum Beispiel Wärme F1 oder dritte Energieform F1-F3, zum Beispiel Kälte F3, nicht ausgeschaltet werden können. Hierfür ordnet die Koordiniereinheit K den Energieformen Prioritäten zu. Die Prioritätenfolge kann fest oder variabel sein.

Beispielsweise kann jene Energieform F1-F3, die einem Energieerzeuger E1-E5 als erstes eine Forderung zum Einschalten erteilt, die höchste Priorität erhalten. Die Energieform F1-F3 kann so lange die höchste Priorität behalten, wie ihre Forderung besteht. Falls in einem Berechnungsschritt k mehrere Energieformen F1-F3 einem Energieerzeuger E1-E5 eine Schaltforderung erteilen, kann die Priorität auch gemäß einer vorbestimmten Prioritätenfolge ermittelt werden.

Die Koordiniereinheit K kann zudem berücksichtigen, dass möglichst wenige Schaltvorgänge wie möglich erfolgen sollen. Insbesondere berücksichtigt die Koordiniereinheit K hierbei auch erzeugerspezifische Vorgaben, da es Energieerzeuger E1-E5 gibt, die nach einem Einschalten oder Ausschalten für eine bestimmte Zeit nicht geschaltet werden dürfen. Andere Energieerzeuger E1-E5 können praktisch unbegrenzt ein- und ausgeschaltet werden.

### Drittes Ausführungsbeispiel

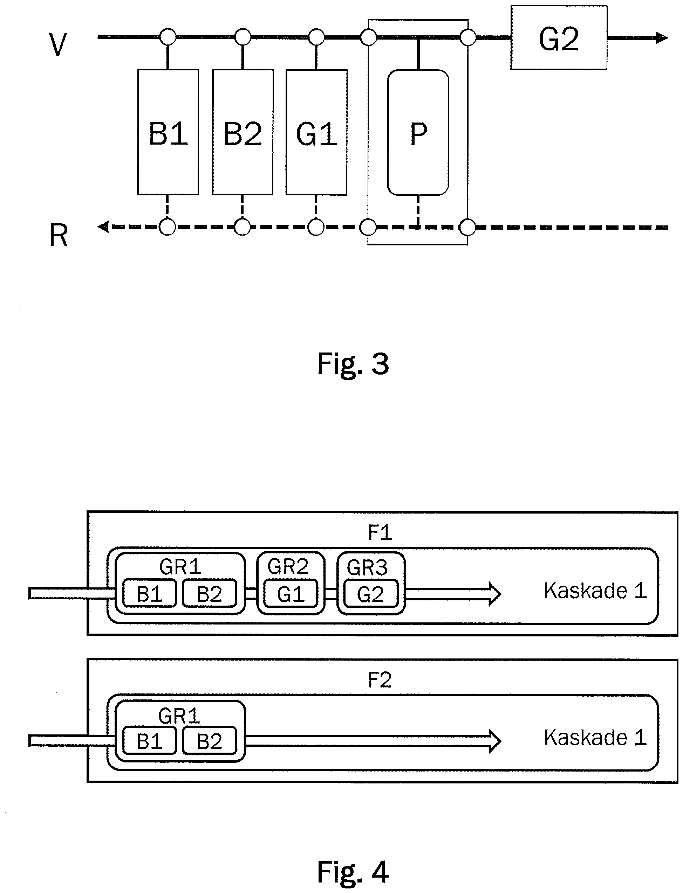

Figur 3 zeigt eine schematische Darstellung eines dritten Ausführungsbeispiels einer Energieversorgungsanlage zum Bereitstellen von Wärme F1 und elektrischer Energie F2. In Figur 3 ist für die Wärmeversorgung ein Hydraulikschema (eine schematische Darstellung der Infrastruktur) der Energieversorgungsanlage dargestellt, bei der Wärme an ein fluides Trägermedium, zum Beispiel Wasser, abgegeben wird. Das Trägermedium transportiert die Wärme über einen Vorlauf V zu mindestens einem Verbraucherkreislauf (nicht dargestellt). Der Vorlauf V ist als durchgezogener Pfeil dargestellt, der die Fließrichtung des Trägermediums zum Verbraucherkreislauf illustriert. Im Verbraucherkreislauf kann eine Vielzahl von Verbrauchern, zum Beispiel eine Vielzahl von Heizkörpern, angeordnet sein.

Über einen Rücklauf R fließt das Trägermedium vom Verbraucherkreislauf zurück zur Energieversorgungsanlage. Der Rücklauf R ist als gestrichelter Pfeil dargestellt, der die Fließrichtung des Trägermediums illustriert. Das Trägermedium kann beispielsweise mittels Umwälzpumpen zum Fließen gebracht werden, die im Erzeugerkreislauf, beispielsweise in den Energieerzeugern B1-B2, G1-G2 und/oder im Verbraucherkreislauf angeordnet sein können. Zudem können Ventile und/oder Drosselklappen und/oder Sensoren zum Messen des Stroms und/oder der Temperatur in den Energieerzeugern B1-B2, G1-G2 und/oder im Vorlauf V und/oder im Rücklauf R angeordnet sein, um einen Fluss durch die Energieerzeuger B1-B2, G1-G2 zu steuern, beziehungsweise zu regeln.

Die Energieversorgungsanlage weist zwei Blockheizkraftwerke (BHKW) B1-B2 und zwei Gaskessel G1-G2 auf, wobei die beiden BHKW B1-B2 jeweils zwischen Vorlauf V und Rücklauf R parallel zueinander angeordnet sind. Über den Rücklauf R fließt das von den Verbrauchern kommende Trägermedium zu den Energieerzeugern, die dem Trägermedium Wärme zuführen. Über den Vorlauf V fließt das Trägermedium zum Verbraucherkreislauf. Die BHKW B1-B2 sind dafür ausgelegt, Energie in Form von Wärme F1 und elektrischen Strom F2 bereitzustellen. Die beiden Gaskessel G1-G2 sind dafür ausgelegt, Energie in Form von Wärme F1 bereitzustellen.

Ein erster Gaskessel G1 ist ebenfalls parallel zu den BHKW B1-B2 und von diesen stromabwärts am Vorlauf V angeordnet. Bei dem ersten Gaskessel G1 handelt es sich beispielsweise um einen Brennwertkessel mit einem hohen Wirkungsgrad. Weiter stromabwärts am Vorlauf V befindet sich ein Pufferspeicher P parallel zum ersten Gaskessel G1 und den BHKW B1-B2. Weiter stromabwärts vom Pufferspeicher P ist ein zweiter Gaskessel G2 in Reihe im Vorlauf V angeordnet, so dass der zweite Gaskessel G2 die Vorlauftemperatur direkt anheben kann. Aufgrund der Anordnung des zweiten Gaskessels G2 im Vorlauf nach dem Pufferspeicher kann er die Temperatur des im Pufferspeicher gespeicherten Wassers nicht beeinflussen. Der zweite Gaskessel G2 ist insbesondere ein Gaskessel, der auch dann noch arbeiten kann, wenn die Temperatur des Trägermediums schon relativ hoch ist.

Obwohl in Figur 3 nicht explizit dargestellt, weisen die BHKW B1-B2 und die Gaskessel G1-G2 jeweils eine Regeleinrichtung R1-R4 zum Regeln von Regelgrößen der Energieerzeuger B1-B2, G1-G2 auf. Eine Steuereinrichtung S ist mit den Regeleinrichtungen R1-R4 verbunden und kann periodisch zu vorgegebenen diskreten Zeitpunkten k die eingestellten Regelgrößen von den Regeleinrichtungen R1-R4 abfragen und/oder Sollwerte SW sowie Einschaltforderungen EIN und Ausschaltforderungen AUS an die Regeleinrichtungen R1-R4 ausgeben. Die Energieversorgungsanlage kann somit ähnlich wie in Figur 1 dargestellt, aber mit vier Energieerzeugern B1-B2, G1-G2, ausgeführt sein. Die Steuereinrichtung S kann Energiebereitstellungsanforderungen EA, also Anforderungen zum Bereitstellen von elektrischer Energie F2 und/oder Wärme F1, zum Beispiel vom Verbraucherkreislauf oder einer übergeordneten Verbrauchssteuerung, empfangen. Die Steuereinrichtung S steuert die Energieerzeuger B1-B2, G1-G2 über die Regeleinrichtungen R1-R4, um den angeforderten Bedarf an Energie zu erfüllen.

Die Energieversorgungsanlage des vorliegen Beispiels soll gemäß folgender Aufgabenstellung betrieben werden: Die BHKW B1-B2 sollen bevorzugt eingesetzt werden, damit neben Wärme F1 möglichst jederzeit auch elektrische Energie F2 bereitgestellt werden kann. Zudem wird der Betrieb von BHKW durch möglichst hohe und ununterbrochene Laufzeiten besonders zuverlässig und durch Vermeiden von Schaltvorgängen können die Energieerzeuger B1-B2, G1-G2 geschont werden.

Der erste Gaskessel G1 soll erst dann eingesetzt werden, wenn beide BHKW B1-B2 bereits in Betrieb sind und die von ihnen im Vorlauf V bereitgestellte Wärme nicht ausreicht, um eine Energiebereitstellungsanforderung EA, zum Beispiel in Form einer geforderten Temperatur im Pufferspeicher P oder einer Anlagenvorlauftemperatur an der Übergabe zum Verbraucherkreislauf (ganz rechts in Figur 3), zu erfüllen. Alternativ kann der Gaskessel G1 auch dann schon eingeschaltet werden, wenn erst eines der beiden BHKW B1-B2 bereits in Betrieb ist, um besonders schnell auf einen vorübergehend erhöhten Wärmebedarf reagieren zu können.

Der zweite Gaskessel G2 soll erst dann eingeschaltet werden, wenn beide BHKW B1-B2 und der erste Gaskessel G1 bereits in Betrieb sind und die bereitgestellte Wärme nicht ausreicht, um eine angeforderte Vorlauftemperatur zu liefern. Die Reihenfolge des Einschaltens der Gaskessel G1 und G2 soll fest sein, da der Gaskessel G1 ein Brennwertkessel mit einem hohen Wirkungsgrad ist. Die BHKW B1 und B2 sollen auch bei Vorliegen einer Energiebereitstellungsanforderung EA nach elektrischer Energie eingeschaltet werden können. Außerdem soll zwischen den beiden BHKW B1-B2 ein Laufzeitausgleich stattfinden.

Anhand von Figur 4 wird nun erklärt, wie eine Reihenfolge des Einschaltens beziehungsweise Ausschaltens der Energieerzeuger der Energieversorgungsanlage bestimmt werden kann. Da die Energieversorgungsanlage sowohl Wärme F1 als auch elektrische Energie F2 bereitstellen kann, wird die Steuerung der Energieversorgungsanlage in zwei Energieformen F1 (für Wärme) und F2 (für elektrische Energie) aufgeteilt.

Wie oben erwähnt ist eine Anforderung an die Steuerung, dass zwischen den BHKW B1-B2 ein Laufzeitausgleich stattfinden soll. Damit die BHKW zuerst eingesetzt werden, müsste bei einer Steuerung gemäß dem Stand der Technik eine feste Reihenfolge des Einschaltens und/oder Ausschaltens mit den BHKW B1-B2 an den ersten beiden Stellen festgelegt werden. Bei einer festen Reihenfolge des Einschaltens und/oder Ausschaltens wäre aber kein Laufzeitausgleich realisierbar. Das erste BHKW B1 würde bei einer herkömmlichen Steuerung wesentlich mehr Betriebsstunden erhalten, als das zweite BHKW B2. Würde alternativ ein Laufzeitausgleich über alle vier Wärmeerzeuger B1-B2, G1-G2 erfolgen, würden die beiden Gaskessel G1-G2 auf eine gleiche oder ähnliche Laufzeit wie die BHKW B1-B2 kommen, wodurch die Anforderung des bevorzugten Einsatzes der BHKW B1-B2 nicht erfüllt werden könnte.

Um den Laufzeitausgleich zu realisieren, werden die beiden BHKW B1-B2 einer ersten Gruppe GR1 zugeordnet. Innerhalb der Gruppe GR1 können die BHKW B1-B2 ihre Stellen tauschen. Ein Kriterium dafür, an welcher Stelle ein BHKW in der Gruppe stehen soll, kann der Laufzeitunterschied zwischen den BHKW B1-B2 sein. Um ein ständiges Tauschen der Stellen der beiden BHKW B1-B2 innerhalb der Gruppe GR1 zu verhindern, kann zudem ein Mindestlaufzeitunterschied festgelegt werden, ab dem ein Tauschen der Stellen erfolgen soll. Die Steuereinrichtung erfasst die Laufzeiten der BHKW B1-B2 und legt in Abhängigkeit der erfassten Laufzeiten die Reihenfolge der BHKW B1-B2 fest.

Stellenspezifische Kriterien sind Kriterien zum Einschalten beziehungsweise Ausschalten von Energieerzeugern, die ihrer jeweiligen Stelle in einer Gruppe erhalten bleiben und beim Austauschen der Stellen innerhalb der Gruppe nicht mit den Energieerzeugern mittauschen. Bei einem stellenspezifischen Kriterium kann es sich zum Beispiel um Vorgaben handeln, wie ein Energieerzeuger zeitlich ein- beziehungsweise ausgeschaltet werden soll. Diese können zum Beispiel ein Einschaltintegral und/oder ein Ausschaltintegral sein. Ein weiteres Beispiel für ein Stellenkriterium ist das Ausschalten eines Energieerzeugers in Abhängigkeit einer Puffertemperatur.

Durch die Verwendung von Stellenkriterien zum Einschalten beziehungsweise Ausschalten von Energieerzeugern kann ein Verhalten der Energieversorgungsanlage festgelegt werden, das unabhängig davon ist, welcher Energieerzeuger sich gerade an der entsprechenden Stelle befindet. So können beispielsweise Schwellenwerte festgelegt werden, bei deren über- oder unterschreiten jeweils ein bestimmtes vorab festgelegtes Schaltverhalten ausgeführt wird. So kann beispielsweise für jede Stelle in der Reihenfolge der Energieerzeuger festgelegt werden, ob bei über- oder unterschreiten eines Schwellenwertes der Energieerzeuger an der jeweiligen Stelle ausgeschaltet oder eingeschaltet werden soll. Es ist somit möglich, das Verhalten einer Energieversorgungsanlage mit einer unter Umständen noch unbekannten Konfiguration unabhängig von den später tatsächlich verwendeten Energieerzeugern, vorab in bestimmten Grenzen festzulegen.

Wie bereits erwähnt soll die Reihenfolge, in der der erste Gaskessel G1 und der zweite Gaskessel G2 eingeschaltet werden, fest sein. Ein Laufzeitausgleich zwischen den Gaskesseln G1-G2 soll nicht stattfinden. Um dies zu erreichen, werden die beiden Gaskessel G1-G2 zwei separaten Gruppen GR2, GR3 zugeordnet.

Die drei Gruppen GR1-GR3 der ersten Energieform F1 können einer gemeinsamen Kaskade 1 zugeteilt werden. Eine Kaskade ist somit eine den Gruppen übergeordnete Ebene der Einteilung der Energieerzeuger. Die Reihenfolge der Gruppen GR1-GR3 ist üblicherweise fest vorgegeben und wird durch die Steuereinrichtung S nicht verändert. Es kann aber auch vorgesehen sein, dass sich die Reihenfolge der Gruppen unter bestimmten Umständen ändert. Damit die BHKW B1-B2 so viele Betriebsstunden wie möglich erreichen können, wird die Gruppe GR1 an erster Stelle innerhalb der Kaskade 1 angeordnet. Da der Gaskessel G1 bevorzugt betrieben werden soll wird die Gruppe GR2 an zweiter Stelle angeordnet. In dem vorliegenden Ausführungsbeispiel ist die Reihenfolge der Gruppe somit festgelegt.

Die BHKW B1-B2 können in diesem Beispiel wie folgt zum Bereitstellen von Wärme betrieben werden: Das erste BHKW B1 an erster Stelle innerhalb der Gruppe GR1 (je nach Laufzeitausgleich kann dies auch das zweite BHKW B2 sein) wird bei Unterschreiten einer geforderten Anlagenvorlauftemperatur eingeschaltet. Die geforderte Anlagenvorlauftemperatur wird hierbei stromabwärts vom zweiten Gaskessel G2 im Vorlauf V gemessen. Bei Überschreiten eines vorbestimmten Grenzwertes der Temperatur im Pufferspeicher P, die in einer unten im Pufferspeicher P liegenden Schicht gemessen wird, wird das erste BHKW B1 ausgeschaltet.

Die Steuerung des zweiten BHKW B2 an zweiter Stelle in Gruppe GR1 erfolgt in ähnlicher Weise, wie die des ersten BHKW B1. Wenn trotz eingeschaltetem BHKW B1 ein Unterschreiten der geforderten Anlagenvorlauftemperatur erfasst wird, schaltet die Steuereinrichtung S das zweite BHKW B2 hinzu. Bei Überschreiten eines vorbestimmten Grenzwertes der Temperatur im Pufferspeicher P, die beispielsweise in einer in der Mitte des Pufferspeicher P liegenden Schicht gemessen wird, schaltet die Steuereinrichtung S das zweite BHKW B2 wieder ab.

Der Gaskessel G1 wird bei bereits eingeschalteten BHKW B1 und B2 bei Unterschreiten der geforderten Anlagenvorlauftemperatur eingeschaltet. Das Ausschalten des Gaskessels G1 erfolgt wenn ein Schwellenwert der Temperatur im Pufferspeicher P, die in einer oben liegenden Schicht gemessen wird, überschritten wird.

Sind die ersten drei Energieerzeuger in Kaskade 1 der Energieform Wärme F1 bereits in Betrieb aber es wird ein Unterschreiten der geforderten Anlagenvorlauftemperatur gemessen, so wird der zweite Gaskessel G2 eingeschaltet. Sobald die geforderte Anlagenvorlauftemperatur überschritten wird schaltet die Steuereinrichtung S den Gaskessel G2 wieder ab.

Die hier beschriebenen Schaltkriterien hinsichtlich des Über- und Unterschreitens von Vorlauf- und Puffertemperaturen sind Beispiele für Stellenkriterien, die unabhängig davon gelten, welcher Energieerzeuger zum jeweiligen Zeitpunkt der betreffenden Stelle zugeordnet ist.

Neben den Energiebereitstellungsanforderungen EA nach Wärme F1 empfängt die Steuereinrichtung S auch Energiebereitstellungsanforderungen EA nach elektrischer Energie F2 beziehungsweise elektrischer Leistung (beispielsweise in Form einer Stromanforderung oder einer Spannungsanforderung). Die BHKW B1-B2 können daher neben einer Energiebereitstellungsanforderung EA für Wärme F1 auch in Abhängigkeit einer Energiebereitstellungsanforderung EA nach elektrischer Energie F2 geschaltet beziehungsweise geregelt werden. Daher werden die BHKW B1-B2 einer zweiten Energieform F2 für elektrische Energie zugeordnet. Energiebereitstellungsanforderungen EA nach elektrischer Energie F2 und/oder Schaltanforderungen (EIN/AUS) an Energieerzeuger, die elektrische Energie F1 bereitstellen werden von der Steuereinrichtung S erzeugt beziehungsweise berücksichtigt.

Die BHKW B1-B2 können somit zum Erfüllen von Energiebereitstellungsanforderungen EA von zwei Energieformen F1-F2 eingesetzt werden. Hierbei kann es vorkommen, dass gegensätzliche Forderungen von der Steuereinrichtung S empfangen (beziehungsweise erzeugt) werden. So kann es sein, dass die Energieform Wärme F1 fordert, dass beide BHKW B1-B2 ausgeschaltet werden sollen, da beispielsweise der Pufferspeicher P seine Maximaltemperatur erreicht hat. Andererseits fordert die Energieform elektrische Energie F2 weiterhin den Betrieb des ersten BHKW an. Die Steuereinrichtung S muss also entscheiden, welche Anforderung aus welcher Energieform F1-F2 prioritär behandelt werden soll.

Insbesondere werden die Energiebereitstellungsanforderungen EA nach Wärme F1 und nach elektrischer Energie F2 von der Steuereinrichtung S in koordinierter Weise bearbeitet. Dies entspricht einer Kompromissfindung zwischen der Energiebereitstellungsanforderung nach Wärme F1 und der Energiebereitstellungsanforderung nach elektrischer Energie F2. Fordert die Energieform Wärme F1 beispielsweise ein Ausschalten AUS eines BHKW B1-B2, prüft die Steuereinrichtung S zunächst, ob weiterhin ein Betrieb des BHKW B1-B2 erforderlich ist, um eine Energiebereitstellungsanforderung nach elektrischer Energie F1-F2 zu erfüllen, bevor das betreffende BHKW B1-B2 ausgeschaltet wird.

Eine mögliche Schaltstrategie sieht vor, dass eine Einschaltforderung EIN immer prioritär behandelt wird ("EIN vor AUS"). Demnach bleibt ein Energieerzeuger immer dann eingeschaltet, wenn mindestens eine Energieform F1-F3 den betreffenden Energieerzeuger anfordert. Der Energieerzeuger wird erst dann ausgeschaltet, wenn keine Energieform F1-F3 mehr den Betrieb des Energieerzeugers fordert. Alternative Strategien können vorsehen, dass eine Ausschaltforderung AUS immer prioritär behandelt wird ("AUS vor EIN") oder eine Priorisierung der Energieformen F1-F3 festgelegt wird, so dass die Steuereinrichtung S eine Schaltanforderung EIN/AUS einer bestimmten Energieform F1-F3 immer bevorzugt befolgt.

Im Folgenden wird eine Modifikation des dritten Ausführungsbeispiels beschrieben, bei der die folgende Aufgabenstellungen erfüllt werden sollen: Anforderungen nach elektrischer Energie F2 sollen durch die BHKW B1-B2 gedeckt werden. Ferner sollen beim Betrieb der BHKW B1-B2 durch die Verbraucher vorgegebene Stromsperren berücksichtigt werden. Eine Stromsperre bezeichnet hier eine Vorgabe, dass keine elektrische Energie von der Energieversorgungsanlage in das lokale Netz eingespeist werden darf. Bei Stromsperren muss somit ein Wärmebedarf allein von den Gaskesseln G1-G2 bereitgestellt werden.

Falls gleichzeitig ein Bedarf nach elektrischer Energie und nach Wärme vorliegt, sollen die BHKW B1-B2 bevorzugt eingesetzt werden. Hierdurch kann der Betrieb der Energieversorgungsanlage besonders zuverlässig sein. Solange keine Stromsperre vorliegt, werden die BHKW B1-B2 zum Bereitstellen von Wärme verwendet, wobei die BHKW B1-B2 beim gleichzeitigen Bereitstellen von elektrischer Energie besonders effizient genutzt werden können.

Die Anzahl der Ein- und Ausschaltvorgänge der BHKW B1-B2 aufgrund von sich ändernden Anforderungen nach elektrischer Energie F2 und/oder Wärme F1 sollen soweit möglich verringert werden. Hierdurch sollen die BHKW B1-B2 geschont werden und ein besonders ununterbrochener und zuverlässiger Dauerbetrieb erreicht werden.

Gemäß dem Stand der Technik sind für die Erfüllung der oben genannten Anforderungen zwei Betriebsweisen bekannt. Bei einer ersten Betriebsweise wirken Anforderungen zum Bereitstellen von elektrischer Energie direkt auf die BHKW B1-B2 und sind somit automatisch höher priorisiert als Anforderungen zum Bereitstellen von Wärme. Diese Betriebsweise kann eine stark eingeschränkte Regelgüte zur Folge haben.

Bei einer alternativen zweiten Betriebsweise berücksichtigt die Steuereinrichtung nur Anforderungen zum Bereitstellen von Wärme. Die dabei von den BHKW B1-B2 erzeugte elektrische Energie ist nur ein Nebenprodukt und kann dementsprechend nicht an den Bedarf angepasst werden. Stromsperren werden in dieser Betriebsweise ignoriert.

In beiden oben beschriebenen Betriebsweisen können Anforderungen zum Bereitstellen von elektrischer Energie und Wärme nicht gleichzeitig bei der Steuerung der Energieversorgungsanlage berücksichtigt werden, obwohl die Energieversorgungsanlage technisch dazu geeignet wäre, da die Energieerzeuger jeweils in ihrer Leistungsabgabe regelbar sind. Beide Betriebsweisen haben zudem den Nachteil, dass Änderungen der Anforderungen zu unnötigen Schaltvorgängen von Energieerzeugern führen können. Dies wird anhand des folgenden Beispiels nach der ersten Betriebsweise illustriert:
Im Ausgangszustand ist ein BHKW aufgrund einer Anforderung zum Bereitstellen elektrischer Energie in Betrieb. Die dabei entstehende Wärme kann den Wärmebedarf decken. Erlischt der Bedarf nach elektrischer Energie, wird das BHKW ausgeschaltet. Hierdurch verringert sich die bereitgestellte Wärmemenge, was zu einer Unterversorgung an Wärme führt, so dass nach kurzer Zeit das BHKW, diesmal zum Zwecke der Wärmeversorgung, wieder eingeschaltet wird. Dieser (zusätzliche) Aus- und Einschaltvorgang führt sowohl zu einer verschlechterten Regelgüte bei der Bereitstellung von Wärme, als auch zu einer reduzierten Lebenserwartung und Zuverlässigkeit der Energieversorgungsanlage.

### Viertes Ausführungsbeispiel

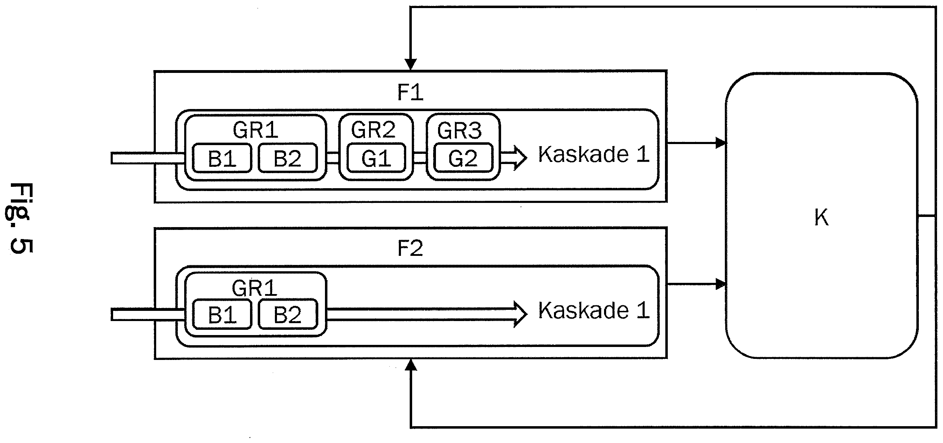

Die erfindungsgemäße Steuerung der Energieversorgungsanlage des dritten Ausführungsbeispiels unter Berücksichtigung von Energiebereitstellungsanforderungen EA nach mehr als einer Energieform F1-F2 wird im Folgenden anhand von Figur 5 beschrieben. Figur 5 zeigt ein viertes Ausführungsbeispiel, bei dem die Steuereinrichtung S als weitere Komponente eine Koordiniereinheit K umfasst, die dazu ausgelegt ist, Energiebereitstellungsanforderungen EA nach Wärme F1 und elektrischer Energie F2 zu koordinieren. Die Steuereinrichtung S kann hierbei ähnlich wie im zweiten Ausführungsbeispiel beschrieben und in Figur 2 dargestellt für jede Energieform F1-F2 eine zugeordnete Steuereinheit S1-S2 umfassen, wobei die Koordiniereinheit K die von den Steuereinheiten S1-S2 erzeugten Sollwerte SW vor dem Ausgeben an die betreffenden Regeleinrichtungen R1-R4 miteinander vergleicht und koordiniert. Wie in Figur 5 dargestellt wird ein Ergebnis des Koordinierens durch die Koordiniereinheit K zu den Energieformen F1-F2 beziehungsweise zu den entsprechenden Steuereinheiten S1-S2 zurückgeführt. Koordinieren bedeutet insbesondere, dass Konflikte zwischen Ein- und Ausschaltforderungen aus unterschiedlichen Energieformen F1-F2 gelöst werden, und dass vermeidbare Schaltvorgänge erkannt werden.

Das von der Steuereinrichtung S mit der Koordiniereinheit K ausgeführte Verfahren kann beispielsweise folgendermaßen ablaufen: Die Steuereinrichtung S prüft, ob das BHKW B1, das aufgrund einer Energiebereitstellungsanforderung EA zum Bereitstellen elektrischer Energie F2 betrieben wird, zum Erfüllen einer Energiebereitstellungsanforderung EA zum Bereitstellen von Wärme F1 ausreichend wäre. Dazu führt die Steuereinrichtung S eine Abschätzung der zum Erfüllen der Energiebereitstellungsanforderung EA zum Bereitstellen von Wärme F1 benötigten Leistung durch. Fällt die zuvor erfasste Energiebereitstellungsanforderung EA zum Bereitstellen elektrischer Energie F2 weg - wird also eine Ausschaltforderung AUS für die Energieform F2 erzeugt (insbesondere durch die Steuereinrichtung S selbst), so kann die Koordiniereinheit K entscheiden, das BHKW B1 nun zum Bereitstellen von Wärme F1 weiter zu betreiben (Übernahme des BHKW B1 durch die Energieform F1). Dazu erzeugt die Steuereinrichtung S eine Einschaltforderung EIN für die Energieform Wärme F1. Der Übergang der Einschaltforderung EIN von der Energieform elektrische Energie F2 auf die Energieform Wärme F1 wird auch als Fremdübernahme bezeichnet.

Das BHKW B1 bleibt aufgrund des verzugsfreien Wechsels der Einschaltforderung EIN zum Bereitstellen elektrischer Energie F2 auf die Einschaltforderung EIN zum Bereitstellen von Wärme F1 durchgehend eingeschaltet und liefert nun weiterhin die Wärme, die zur Aufrechterhaltung des Wärmebedarfs erforderlich ist. Hierdurch kann ein Schaltvorgang des Aus- und Wiedereinschaltens von BHKW B1 vermieden werden. Die Regelgüte für die Bereitstellung von Wärme bleibt durchweg hoch und die Lebensdauer des BHKW B1 kann verbessert werden.

Durch die Prüfung der Möglichkeit einer Übernahme einer Einschaltforderung EIN an einen Energieerzeuger von einer Energieform zu einer anderen wird aus dem gesteuerten Betrieb der Energieversorgungsanlage (für eine erste Energieform F1 wird eine Einschaltforderung EIN erfasst, Änderungen einer Schaltforderung zum Bereitstellen einer weiteren Energieform F2 werden als Störeinflüsse akzeptiert) ein geregelter Betrieb der Anlage. Über die Koordiniereinheit K erfolgt eine Rückführung der berechneten Schaltforderungen EIN/AUS auf die jeweils andere Energieform, so dass Änderungen in den Schaltforderungen unmittelbar und in koordinierter Weise berücksichtigt werden können.

### Fünftes Ausführungsbeispiel

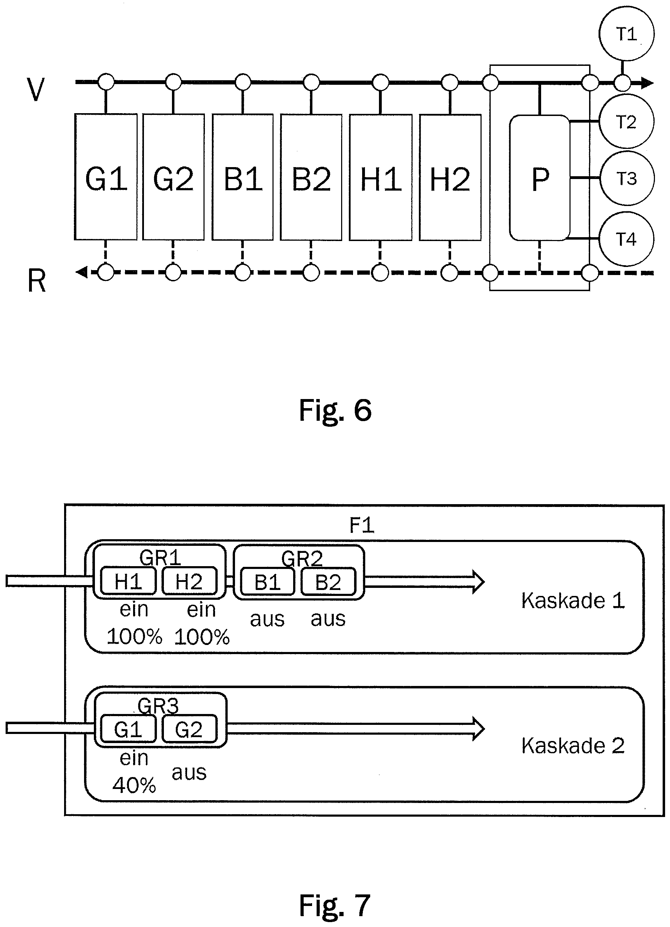

Figur 6 zeigt ein Hydraulikschema einer Energieversorgungsanlage gemäß einem fünften Ausführungsbeispiel. Die Energieversorgungsanlage umfasst je zwei Gaskessel G1-G2, zwei BKHW B1-B2 und zwei Holzkessel H1-H2 sowie einen Pufferspeicher P. Außerdem ist im Vorlauf V ein Temperatursensor T1 angeordnet, der die Anlagenvorlauftemperatur misst. Im Pufferspeicher P sind drei Temperatursensoren T2-T4 angeordnet, die jeweils die Temperatur im Pufferspeicher P messen, respektive in einem oberen Bereich, in einem mittleren Bereich und in einem unteren Bereich des Pufferspeichers. Die Temperatursensoren T1-T4 geben ihre Messsignale an eine Steuereinrichtung S aus.

Die Steuerung der Energieversorgungsanlage erfolgt in Abhängigkeit einer erfassten Energiebereitstellungsanforderung EA, die zum Beispiel eine geforderte Anlagenvorlauftemperatur, zum Beispiel am Messpunkt T1, oder eine Pufferspeichertemperatur an einem der drei Messpunkte T2-T4 des Pufferspeichers P festlegt. Die Steuereinrichtung S kann dann in Abhängigkeit einer Abweichung der an den Messpunkten T1-T4 gemessenen Werte von den Vorgaben der Energiebereitstellungsanforderung EA Sollwerte SW für die Energieerzeuger B1-B2, G1-G2, H1-H2 bestimmen und an die entsprechenden Regeleinrichtungen ausgeben.

Die beiden Holzkessel H1-H2 werden zusammen einer Gruppe GR1 zugeordnet. Wie oben beschrieben kann in der Gruppe ein Laufzeitausgleich zwischen den Holzkesseln H1-H2 stattfinden. In entsprechender Weise werden die beiden BHKW B1-B2 der Gruppe GR2 zugeordnet und ebenfalls mit Laufzeitausgleich betrieben. Die beiden Gaskessel G1 und G2 werden der Gruppe GR3 zugeordnet. Auch zwischen den Gaskessel G1-G2 kann ein Laufzeitausgleich stattfinden. Diese Einteilung der Energieerzeuger in Gruppen erfolgt innerhalb der Energieform Wärme F1. Die beiden BHKW B1-B2 werden außerdem innerhalb der Energieform elektrische Energie F2 in Gruppen (oder eine Gruppe) eingeteilt.

Die Holzkessel H1-H2 und die BHKW B1-B2 werden als bevorzugte Energieerzeuger eingestuft, da ihr Betrieb im Vergleich zu den Gaskesseln G1-G2 wirtschaftliche Vorteile aufweist. Die Gruppen GR1 und GR2 werden dazu einer ersten Kaskade 1 zugeordnet. Die Reihenfolge der Gruppen GR1 und GR2 innerhalb der Gruppe kann anhand von gruppenspezifischen Kriterien erfolgen. So kann die Reihenfolge zum Beispiel je nach aktuellen Brennstoffkosten oder der Verfügbarkeit von verwendeten Energieträgern festgelegt werden, in Abhängigkeit von geplanten Wartungsmaßnahmen erfolgen oder von einer Energiebereitstellungsanforderung für elektrische Energie F2 abhängig gemacht werden. Außerdem können erzeugerspezifische Kriterien die Reihenfolge der Gruppen GR1, GR2 in der Kaskade 1 beeinflussen.

Eine Vorgabe an die Steuereinrichtung S kann sein, dass eine große Energiemenge im Pufferspeicher P bevorratet werden soll. Für die Puffertemperaturregelung wird hierbei ein Puffertemperatursensor T4 an einem unteren Bereich des Pufferspeichers P ausgewählt. Die Puffersolltemperatur wird beispielsweise auf 70°C eingestellt. Die Steuereinrichtung S sorgt dann dafür, dass der Pufferspeicher P vollständig auf mit einer Temperatur von 70°C geladen wird.

Soll der Pufferspeicher P nur ungefähr zur Hälfte bevorratet werden, wird ein Puffertemperatursensor T3 in einem mittleren Bereich des Pufferspeichers P für die Puffertemperaturregelung ausgewählt.

Wenn keine Pufferbevorratung erwünscht ist wird ein Puffertemperatursensor T2 an einem oberen Bereich des Pufferspeichers P für die Puffertemperaturregelung ausgewählt. Die Vorgabe einer Puffersolltemperatur ist nicht erforderlich, da eine Energieerzeugervorlaufsolltemperatur aus einer Anlagenvorlaufsolltemperatur errechnet werden kann. Es wird nur so viel Energie erzeugt, wie von den Verbrauchern aufgenommen wird, der Pufferspeicher P wird in diesem Fall nicht geladen. Die Anlagenvorlauftemperatur kann beispielweise von einem Temperatursensor T1 am Vorlauf V gemessen werden.

Figur 7 illustriert die Einteilung der Energieerzeuger des siebten Ausführungsbeispiels in Gruppen und Kaskaden. Außerdem wird ein beispielhafter Anlagenzustand angezeigt, bei dem die beiden Holzkessel H1-H2 der ersten Gruppe GR1 beide eingeschaltet sind und unter Volllast laufen. Die beiden BHKW B1-B2 der zweiten Gruppe GR2 sind ausgeschaltet. Der erste Gaskessel G1 ist eingeschaltet und wird modulierend betrieben bei einer Last von momentan 40%.

### Sechstes Ausführungsbeispiel

In einem sechsten Ausführungsbeispiel soll die Wirkungsweise des erfindungsgemäßen Verfahrens detailliert beschrieben werden. Das Verfahren ist zielt darauf ab, Ein- und Ausschaltvorgänge von Energieerzeugern soweit wie möglich zu minimieren. In anderen Worten, ein Ziel des Verfahrens ist die Vermeidung von Erzeugertaktungen.

Bei bestimmten Energieerzeugern, wie zum Beispiel einem BHKW oder einer Wärmepumpe, besteht (physikalisch bedingt) eine Kopplung zwischen mehreren Energieformen F1-F3. Dementsprechend können diese Energieerzeuger auch von Energiebereitstellungsanforderungen EA aus verschiedenen Energieformen F1-F3 betroffen sein. Die Energiebereitstellungsanforderungen EA der einzelnen Energieformen F1-F3 werden unabhängig voneinander erzeugt und können daher auch widersprüchliche Anforderungen an Energieerzeuger stellen.

Eine Möglichkeit, um Konflikte aufgrund widersprüchlicher Anforderungen an Energieerzeuger zu lösen, kann durch Implementieren der bereits beschriebenen Grundregel "EIN vor AUS", erfolgen (siehe erstes Ausführungsbeispiel). Das heißt, dass eine Einschaltforderung EIN gegenüber einer Ausschaltforderung AUS immer vorrangig behandelt wird. Hierbei kann sich aber der Nachteil ergeben, dass ein Überangebot einer der Energieformen F1-F3 erzeugt wird, wodurch der Verbrauch der Energieversorgungsanlage höher ausfallen kann als nötig. Das Erteilen einer Forderung zum Einschalten eines Energieerzeugers wird im Folgenden auch als Anfordern des Energieerzeugers bezeichnet. Das Entziehen einer Forderung zum Einschalten eines Energieerzeugers muss nicht unbedingt zum Ausschalten des Energieerzeugers führen, wie im Folgenden anhand von Beispielen näher erläutert wird. Auch eine Ausschaltforderung AUS muss nicht unbedingt zum Ausschalten eines Energieerzeugers führen.

Wird einem Energieerzeuger eine Sperre erteilt, beziehungsweise liegt ein erzeugerspezifisches Kriterium vor, das ein Einschalten eines Energieerzeugers verhindert, so wird dieser Umstand von der Steuereinrichtung S beim Erstellen von Einschaltforderungen EIN berücksichtigt. Der betroffene Energieerzeuger wird für die Dauer der Sperre beim Steuern der Energieversorgungsanlage nicht beachtet. Insbesondere wenn eine Reihenfolge des Einschaltens und/oder Ausschaltens festgelegt wurde, wird ein gesperrter Energieerzeuger beim Abarbeiten der Reihenfolge übersprungen. Hierdurch wird verhindert, dass die Steuerung an dem gesperrten Energieerzeuger hängen bleibt und einer Energiebereitstellungsanforderung EA nicht mehr optimal nachkommen kann.

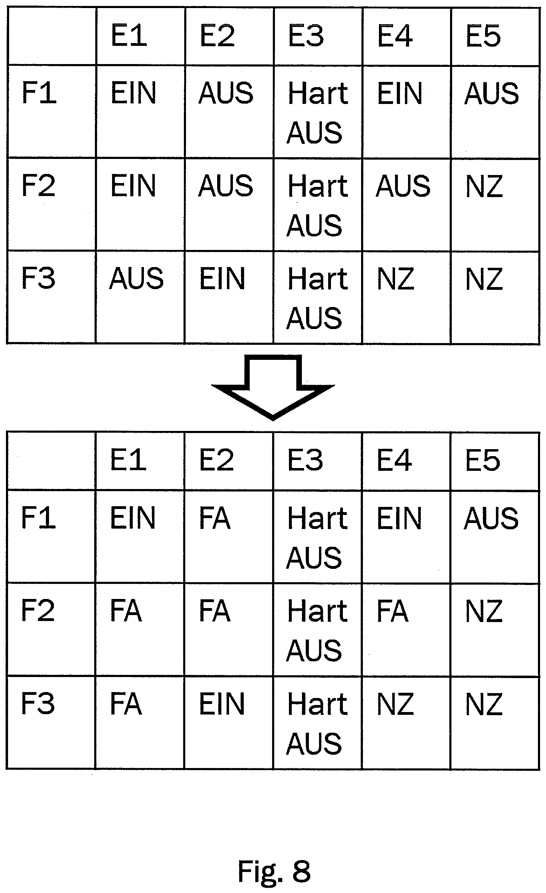

Die Steuereinrichtung steuert die Energieerzeuger in Abhängigkeit der von ihnen bereitgestellten Energieform(en) F1-F3. Dazu werden die Energieerzeuger den Energieformen F1-F3 zugeordnet, die sie bereitstellen können. Bei Vorliegen einer Energiebereitstellungsanforderung EA ermittelt die Steuereinrichtung S, welchen Energieerzeugern eine Forderung zum Einschalten EIN von mehr als einer Energieform F1-F3 erteilt wird, beziehungsweise, die Steuereinrichtung ermittelt für jede durch die vorliegende(n) Energiebereitstellungsanforderung(en) EA angeforderte Energieform F1-F3, welche der verfügbaren Energieerzeuger zum Erfüllen der Energiebereitstellungsanforderung(en) EA erforderlich sind. Daraus folgend erzeugt die Steuereinrichtung Einschaltforderungen EIN für die zum Erfüllen der Energiebereitstellungsanforderung(en) EA erforderlichen Energieerzeuger und vorzugsweise auch Ausschaltforderungen AUS für die zum Erfüllen der Energiebereitstellungsanforderung(en) EA nicht erforderlichen Energieerzeuger. Insbesondere kann die Steuereinrichtung die ermittelten Einschaltforderungen EIN und Ausschaltforderungen AUS Beispiel als Matrix (siehe Figur 8) darstellen, die im Folgenden näher beschrieben wird.

Es kann erforderlich sein, den Energiebedarf einer ersten Energieform, zum Beispiel Wärme F1, im Voraus abzuschätzen, um beurteilen zu können, ob ein von einer zweiten Energieform, zum Beispiel elektrische Energie F2, angeforderte Energieerzeuger zur Erfüllung des Energiebedarfs der ersten Energieform F1 benötigt wird. Ist dies der Fall, können von der zweiten Energieform F2 angeforderte Energieerzeuger auch bei Wegfallen des Bedarfs der zweiten Energieform F2 zum Bereitstellen der ersten Energieform F1 weiterbetrieben werden, wodurch unnötige Schaltvorgänge vermieden werden können. Vermeiden von Schaltvorgängen kann die Lebensdauer von Energieerzeugern erhöhen und die zum Erreichen eines Sollwerts benötigte Zeit verkürzen.

Die Forderungen der unterschiedlichen Energieformen können in einer Forderungsmatrix zusammengefasst werden. Die obere Matrix in Figur 8 ist ein Beispiel für eine Forderungsmatrix für fünf Energieerzeuger E1-E5 und drei Energieformen F1-F3. In den Spalten stehen die Energieerzeuger E1-E5 und in den Zeilen die Energieformen F1-F3. Ein Eintrag der Matrix kann eine Einschaltforderung (EIN), eine Ausschaltforderung (AUS), einen Hinweis, dass der Energieerzeuger E1-E5 die betreffende Energieform F1-F3 nicht anbietet ("nicht zutreffend", NZ) oder eine Sperre ("Hart AUS") des Energieerzeugers E1-E5 angeben. Damit beinhaltet die Matrix alle Informationen über die Forderungen der einzelnen Energieformen F1-F3 für die einzelnen Energieversorger E1-E5.

In dem gezeigten Beispiel wird der Energieerzeuger E3 gerade gewartet und kann daher nicht verwendet werden. In der Forderungsmatrix steht ein "Hart AUS". Energieerzeuger E1 erhält von den Energieformen F1 und F2 eine Einschaltforderung EIN und von F3 eine Ausschaltforderung AUS. Energieerzeuger E4 kann nur Energieformen F1 und F2 bereitstellen, Energieerzeuger E5 nur Energieform F1.

Über die Forderungsmatrix wird das Zusammenspiel zwischen den Energieformen F1-F3 geregelt. Die Steuereinrichtung S kann vorzugsweise eine Koordiniereinheit K aufweisen, die dafür ausgelegt ist, die Forderungen der einzelnen Energieformen F1-F3 an die Energieerzeuger E1-E5 zu koordinieren.

Bei der Auswertung der Forderungsmatrix kann die Strategie verfolgt werden, dass Energieerzeuger E1-E5, die mehr als eine Energieform F1-F3 bereitstellen können und für eine Energieform F1-F3 eine Einschaltforderung EIN erhalten haben, von anderen Energieformen F1-F3 nicht mehr ausgeschaltet werden können. Dies kann zum Beispiel über die bereits beschriebenen Regeln "EIN vor AUS" oder "AUS vor EIN" erfolgen. Alternativ können die Energieformen F1-F3 priorisiert werden. Die höchstpriorisierte Energieform F1-F3, die einem Energieerzeuger E1-E5 eine Einschaltforderung EIN erteilt, wird zum sogenannten Master über den Energieerzeuger E1-E5.

Unter Berücksichtigung der Priorisierung der Energieformen F1-F3 oder der Regel "EIN vor AUS" beziehungsweise "AUS vor EIN" kann aus der Forderungsmatrix eine sogenannte Fremdanforderungsmatrix (kurz FA-Matrix) bestimmt werden. Die FA-Matrix erhält für jede Energieform F1-F3 und jeden Energieerzeuger E1-E5 Informationen darüber, ob der entsprechende Energieerzeuger E1-E5 von einer Energieform F1-F3 mit höherer Priorität (Master) eine Einschaltforderung EIN erhalten hat. Die Einschaltforderung EIN der Master-Energieform F1-F3 wird in Bezug auf die Energieform F1-F3 mit niedrigerer Priorität auch als Fremdanforderung (FA) bezeichnet. Entsprechend kann die FA-Matrix einen oder mehrere Einträge "FA" aufweisen. Solange ein Energieerzeuger E1-E5 in der FA-Matrix für eine Energieform F1-F3 einen Eintrag "FA" aufweist, kann er von dieser Energieform F1-F3 nicht mehr ausgeschaltet werden.

Insbesondere ist es deshalb vorteilhaft, eine der Energieformen F1-F3 als Master für einen Energieerzeuger E1-E5 zu bestimmen, um zu vermeiden, dass ein zunächst fremdangeforderter FA Energieerzeuger E1-E5 aufgrund eines pauschalen Übernehmens der Fremdanforderung FA nicht mehr ausschaltbar wird. Wenn es also keinen Master gäbe, und alle Energieformen F1-F3 gleichberechtigt wären beim Anfordern eines Energieerzeugers E1-E5, zum Beispiel alle Energieformen F1-F3 stellen eine Einschaltforderung EIN an den Energieerzeuger E1-E5, so würden die die Energieformen F1-F3 jeweils gegenseitig Fremdanforderungen FA erzeugen, so dass keine der Energieformen F1-F3 den betreffenden Energieerzeuger E1-E5 mehr ausschalten könnte.

Figur 8 illustriert, wie aus der Forderungsmatrix (oben) eine Fremdanforderungsmatrix (unten) erstellt wird. Für den ersten Energieerzeuger E1 liegt jeweils für die erste Energieform F1 und die zweite Energieform F2 eine Einschaltforderung EIN vor. Die dritte Energieform F3 liefert eine Ausschaltforderung AUS. Bei Vorliegen von zwei Einschaltforderungen EIN muss entschieden werden, welche der Energieformen F1-F2 den Energieerzeuger E1 als Master übernehmen soll.

Dies kann beispielsweise anhand einer Priorisierung der Energieformen F1-F2 erfolgen, oder indem bestimmt wird, welche Energieform F1-F2 als erstes eine Einschaltforderung EIN erteilt hat. In dem Beispiel der Figur 8 wird die erste Energieform F1 zum Master von E1. Daher stehen in den Einträgen der Energieformen F2 und F3 in der FA-Matrix jeweils die Einträge "FA". Bei den Energieerzeugern E2 und E4 liegt jeweils nur eine Einschaltforderung EIN vor, so dass hier jeweils die Energieform F1-F3 mit der Einschaltforderung EIN zum Master wird. Die Energieerzeuger E3 und E5 bleiben beide ausgeschaltet. Für sie wird keine Fremdanforderung FA erzeugt.

Eine Energieform F1-F3 kann, wie schon erwähnt, beispielsweise dann als Master über einen Energieerzeuger E1-E5 festgelegt werden, wenn sie dem betreffenden Energieerzeuger E1-E5 als erste eine Einschaltforderung EIN erteilt hat. Die Energieform F1-F3 kann solange Master bleiben, bis sie ihre Einschaltforderung EIN zurückzieht, beziehungsweise durch eine Ausschaltforderung AUS ersetzt. Erteilen zwei Energieformen F1-F3 einem Energieerzeuger E1-E5 gleichzeitig eine Einschaltforderung EIN kann beispielsweise auf eine vorab festgelegte Prioritätsfolge der Energieformen F1-F3 zurückgegriffen werden. Beim Betreiben eines BHKW, wie zum Beispiel in einer Energieversorgungsanlage des fünften Ausführungsbeispiels, wäre es sinnvoll der Energieform elektrische Energie F2 die höchste Priorität zuzuweisen, da die Energieform Wärme F1 als Nebenprodukt abfällt.

Fremdangeforderte Energieerzeuger E1-E5 bleiben eingeschaltet und leisten einen Beitrag zur Deckung des Energiebedarfs für alle jeweils betroffene Energieformen F1-F3. Wird ein Energieerzeuger E1-E5 von der ersten Energieform F1-F3 (Master) nicht mehr angefordert, so kann der Energieerzeuger von einer zweiten Energieform F1-F3, in der er als fremdangefordert (FA) galt, übernommen werden, wenn der Energieerzeuger E1-E5 zum Erfüllen der Energiebereitstellungsanforderung EA der zweiten Energieform F1-F3 benötigt wird. Hierzu kann die Steuereinrichtung S eine Schätzung des erwarteten Energiebedarfs durchführen. Die zweite Energieform F1-F3 erteilt dem betreffenden Energieerzeuger E1-E5 eine Einschaltforderung EIN. Nimmt die erste Energieform F1-F3 ihre Einschaltforderung EIN zurück, beziehungsweise gibt sie stattdessen eine Ausschaltforderung AUS aus, so wird die zweite Energieform F1-F3 zum Master des betreffenden Energieerzeugers E1-E5. Hierdurch kann verhindert werden, dass der Energieerzeuger E1-E5 zunächst ausgeschaltet und dann durch eine Einschaltforderung EIN der zweiten Energieform F1-F3 wieder eingeschaltet wird.

Um zu entscheiden, ob ein Energieerzeuger E1-E5 nach Rücknahme einer Einschaltforderung EIN durch eine erste Energieform F1-F3 von einer zweiten Energieform F1-F3 weiterbetrieben werden soll, kann die Steuereinrichtung S dazu ausgelegt sein, einen erwarteten Energiebedarf zu bestimmen. Ferner kann die Steuereinrichtung S dazu ausgelegt sein, abzuschätzen, ob der Bedarf durch die freigegebenen Energieerzeuger E1-E5 gedeckt werden kann, wobei alle Energieerzeuger E1-E5 der zweiten Energieform F1-F3 einen Beitrag leisten können.

Um den Energiebedarf einer bestimmten Energieform F1-F3 zu bestimmen, können sogenannte Indikatoren betrachtet werden. Jedem fremdangeforderten FA Energieerzeuger E1-E5 werden individuelle Indikatoren zugewiesen, wobei ein Indikator ein weiterer Energieerzeuger E1-E5 der betreffenden Energieform F1-F3 ist. Sobald ein Indikator eine Forderungsänderung erhält (von EIN nach AUS oder von AUS nach EIN), kann die Annahme gemacht werden, dass in der betreffenden Energieform F1-F3 entweder zu viel (EIN nach AUS) oder zu wenig (AUS nach EIN) Energie bereitgestellt wird. Erhält ein Indikator eine Einschaltforderung EIN, nachdem er zuvor ausgeschaltet war (AUS nach EIN), so ist dies ein Hinweis darauf, dass die Energieerzeuger E1-E5 der betreffenden Energieform F1-F3 zu wenig Energie bereitstellen. In diesem Fall ist das Ergebnis des Bestimmens des Energiebedarfs, dass der zuvor fremdangeforderte FA Energieerzeuger E1-E5 von der Energieform F1-F3 weiter betrieben wird, also entsprechend eine Einschaltforderung EIN von der Energieform F1-F3 erteilt bekommt. Wird ein Indikator dagegen ausgeschaltet (AUS nach EIN), deutet dies auf ein Überangebot an Energie der Energieform F1-F3 hin, so dass der zuvor fremdangeforderte FA Energieerzeuger E1-E5 nicht übernommen wird und eine Ausschaltforderung AUS erhält.

Indikatoren sind vorzugsweise schaltbare (beziehungsweise regelbare) Energieerzeuger E1-E5 innerhalb einer Energieform F1-F3. Die Energieerzeuger E1-E5 werden gemäß einer festgelegten Reihenfolge zum Einschalten und/oder Ausschalten geschaltet. Es wird zwischen Einschaltindikatoren und Ausschaltindikatoren unterschieden, wobei jeder fremdangeforderte FA Energieerzeuger E1-E5 von der Steuereinrichtung einen Einschaltindikator und/oder einen Ausschaltindikator zugewiesen bekommt. Das Erteilen einer Einschaltforderung (AUS nach EIN) an einen Einschaltindikator führt dazu, dass ein zunächst fremdangeforderter FA Energieerzeuger E1-E5 innerhalb der betrachteten Energieform F1-F3 von der Energieform F1-F3 übernommen wird, also dass ihm die Energieform F1-F3 eine Einschaltforderung EIN erteilt. Das Erteilen einer Ausschaltforderung (EIN nach AUS) eines Ausschaltindikators führt dazu, dass ein fremdangeforderter Energieerzeuger E1-E5 von der Energieform F1-F3 nicht übernommen wird. Im Folgenden wird dieses Verfahren anhand von Beispielen näher beschrieben.

Bei der Vergabe der Indikatoren wird zwischen drei Modi, die unterschiedliche Wirkungen erzielen, unterschieden. Es wird entweder keine Taktreduzierung, eine geringe Taktreduzierung oder eine hohe Taktreduzierung angestrebt, wobei Taktreduzierung bedeutet, dass ein Vorgang des Ausschaltens und Wiedereinschaltens (beziehungsweise umgekehrt ein Vorgang des Einschaltens und Wiederausschaltens) eines Energieerzeugers E1-E5 vermieden wird.

Soll keine Taktreduzierung bewirkt werden, so findet auch keine Übernahme der fremdangeforderten FA Energieerzeuger E1-E5 statt. Eine geringe Taktreduzierung wird dann erzielt, wenn eine bedarfsgerechte Übernahme der fremdangeforderten FA Energieerzeuger E1-E5 entlang einer Reihenfolge des Einschaltens und/oder Ausschaltens erfolgt. Hierbei muss also eine Berechnung des erwarteten Energiebedarfs von der Steuereinrichtung S ausgeführt werden. Eine hohe Taktreduzierung kann erzielt werden, indem eine direkte Übernahme aller fremdangeforderten FA Energieerzeuger E1-E5 in Abhängigkeit des nächsten einschaltbaren Energieerzeuger E1-E5 innerhalb der Reihenfolge des Einschaltens erfolgt.

In welchem Modus die Steuereinrichtung S verfahren soll, kann entweder durch einen Benutzer manuell festgelegt werden, durch eine übergeordnete Vorrichtung bestimmt werden oder durch die Steuereinrichtung S selbst anhand von Parametern (Beispielsweise in Abhängigkeit der Jahreszeit und/oder einer Außentemperatur) bestimmt werden. Wird der Modus "keine Taktreduzierung" gewählt, so findet keine Übernahme der fremdangeforderten Energieerzeuger E1-E5 statt. Das heißt, dass von einer ersten Energieform F1-F3 fremdangeforderte Energieerzeuger E1-E5 von den übrigen Energieformen F1-F3 nicht mehr berücksichtigt werden. Beispielsweise wird einem ersten Energieerzeuger E1 von einer ersten Energieform F1 zunächst eine Ausschaltforderung AUS erteilt. Eine zweite Energieform F2 benötigt diesen Energieerzeuger E1 aber zur Deckung des Energiebedarfs und erteilt dem Energieerzeuger E1 eine Einschaltforderung EIN. Wenn keine Taktreduzierung erfolgt, so hat dies zur Folge, dass der Energieerzeuger E1 zunächst ausgeschaltet und dann wieder eingeschaltet wird. Somit wird hierbei ein häufiges Takten (Schalten) von Energieerzeugern nicht verhindert, so dass der Verschleiß der Energieerzeuger E1-E5 durch das Schalten relativ hoch sein kann.

Im Modus "geringe Taktreduzierung" können Energieerzeuger E1-E5 bedarfsgerecht von Energieformern F1-F3 übernommen werden. Bedarfsgerecht heißt, dass die Übernahme in Abhängigkeit des erwarteten, insbesondere von der Steuereinrichtung S berechneten, Energiebedarfs erfolgt. Außerdem kann die Übernahme bei Bedarfsänderung auch zurückgenommen werden. Dieser Modus berücksichtigt für jede Energieform F1-F3 auch eine vorab festgelegte Reihenfolge des Einschaltens und/oder Ausschaltens der Energieerzeuger E1-E5 innerhalb der Energieform F1-F3. Dies bedeutet, dass die Energieerzeuger im Normalfall nur entlang der Reihenfolge des Einschaltens und/oder Ausschaltens eingeschaltet beziehungsweise ausgeschaltet werden.

Bei der bedarfsgerechten Übernahme kann die Annahme gemacht werden, dass ein von einer ersten Energieform, zum Beispiel Wärme F1, fremdangeforderter erster Energieerzeuger E1 von einer zweiten Energieform, zum Beispiel elektrischer Strom F2, ebenfalls eine Einschaltforderung EIN erhalten würde, wenn es in der Reihenfolge des Einschaltens nach dem ersten Energieerzeuger E1 mindestens einen weiteren Energieerzeuger E21-E5 gibt, der von der zweiten Energieform F2 eine Einschaltforderung EIN erhält. Deshalb kommen bei der Bestimmung des Einschaltindikators eines fremdübernommenen Energieerzeugers E1 nur einschaltbare Energieerzeuger E2-E5 infrage, die in der Reihenfolge des Einschaltens nach dem betrachteten fremdübernommenen Energieerzeuger E1 stehen. Energieerzeuger E2-E5, die in der Reihenfolge des Einschaltens vor dem betrachteten fremdübernommenen Energieerzeuger E1 stehen, können keine Einschaltindikatoren sein. Von allen infrage kommenden Energieerzeuger E2-E5, wird insbesondere derjenige Energieerzeuger E2-E5 als Einschaltindikator bestimmt, der den geringsten Abstand entlang der Reihenfolge des Einschaltens zum betrachteten fremdübernommenen Energieerzeuger E1 hat.

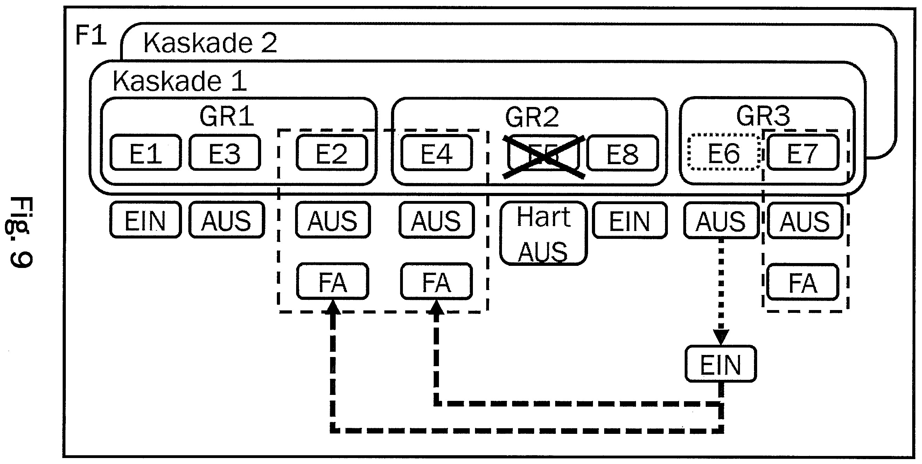

Anhand der Darstellung in Figur 9 wird das oben beschriebene Konzept der bedarfsgerechten Übernahme und Einschaltindikatoren beispielhaft erläutert. Figur 9 zeigt acht Energieerzeuger E1-E8 einer ersten Energieform F1, die in einer ersten Reihenfolge des Einschaltens und/oder Ausschaltens (Kaskade 1) angeordnet sind. Ferner kann es noch weitere Kaskaden mit unabhängig von der ersten Kaskade 1 ausführbaren Reihenfolgen des Einschaltens und/oder Ausschaltens geben. Unter den Energieerzeugern E1-E8 sind jeweils die Einschaltforderungen EIN und/oder Ausschaltforderungen AUS der ersten Energieform F1 dargestellt. Energieerzeuger E1 und E8 weisen eine von Energieform F1 erteilte Einschaltforderung EIN auf. Die restlichen Energieerzeuger E2-E7 weisen Ausschaltforderungen AUS auf, wobei Energieerzeuger E5 eine Sperre hart AUS aufweist, so dass er nicht eingeschaltet werden kann. Energieerzeuger E2, E4 und E7, denen von Energieform F1 eine Ausschaltforderung AUS erteilt wurde, sind von anderen Energieformen jeweils durch Einschaltforderungen EIN fremdangefordert FA. Im Folgenden wird beschrieben unter welchen Voraussetzungen einer der fremdangeforderten Energieerzeuger E2, E4 und E7 durch Energieform F1 übernommen werden kann.

Zunächst wird bestimmt, welcher der Energieerzeuger mit vorliegender Ausschaltforderung AUS als Einschaltindikator dienen kann. Energieerzeuger E3 ist nach E1 der erste einschaltbare Energieerzeuger entlang der Reihenfolge des Einschaltens in Kaskade 1 der Energieform F1. Da Energieerzeuger E3 jedoch allen fremdangeforderten Energieerzeugern E2, E4, E7 in der Reihenfolge des Einschaltens (von links nach rechts) vorangestellt ist, kann er im Modus "geringe Taktreduzierung" für keinen dieser Energieerzeuger E2, E4, E7 Einschaltindikator sein. In anderen Worten, ein Einschalten nur von E3 würde nicht zur Übernahme eines der Energieerzeuger E2, E4, E7 in der Energieform F1 führen.

Die beiden Energieerzeuger E2 und E4 sind fremdangefordert FA und haben in der Reihenfolge des Einschaltens nach sich einen einschaltbaren Energieerzeuger, nämlich Energieerzeuger E6. Entsprechend ist E6 der Einschaltindikator für E2 und E4. In anderen Worten, ein Einschalten von E6 (Pfeil mit gepunkteter Linie von AUS nach EIN) würde zur Übernahme der fremdangeforderten Energieerzeuger E2 und E4 führen. Die Energieform F1 würde also den Energieerzeugern E2 und E4 jeweils eine Einschaltforderung EIN erteilen, wenn sie gemäß der Reihenfolg zunächst dem Energieerzeuger E6 eine Einschaltforderung EIN erteilt. Da der Energieerzeuger E6 im vorliegenden Beispiel der Figur 9 in der Reihenfolge des Einschaltens aber erst nach Energieerzeuger E3 steht, könnte der Energieerzeuger E6 allerdings erst gleichzeitig mit oder nach Einschalten von Energieerzeuger E3 eingeschaltet werden.

Bei Übernahme der beiden fremdangeforderten Energieerzeuger E2 und E4 könnte die Steuereinrichtung S entscheiden, und zwar in Abhängigkeit eines berechneten Energiebedarfs, dass der Einschaltindikator selbst, also Energieerzeuger E6, trotz der Einschaltforderung EIN gar nicht erst eingeschaltet wird, und die Einschaltforderung EIN für E6 wieder durch eine Ausschaltforderung AUS ersetzt wird. Die ist insbesondere dann der Fall, wenn der berechnete Energiebedarf durch die übernommenen Energieerzeuger E2 und E4 erfüllt werden kann.

Die Übernahme der fremdangeforderten Energieerzeuger E2 und E4 wird in Figur 9 durch die Pfeile mit den gestrichelten Linien angedeutet. Energieerzeuger E7 hat als letzter in der Reihenfolge keinen einschaltbaren Energieerzeuger nach sich. Somit hat Energieerzeuger E7 keinen Einschaltindikator und könnte nicht von Energieform F1 übernommen werden.

Derselbe Grundgedanke findet auch bei der Bestimmung des Ausschaltindikators Anwendung. Die Übernahme eines fremdangeforderten Energieerzeugers wird zurückgenommen, wenn der letzte ausschaltbare Energieerzeuger in der Reihenfolge nach dem (rechts vom) betrachteten fremdangeforderten Energieerzeuger eine Ausschaltforderung AUS erhält. Falls in der Reihenfolge kein weiterer ausschaltbarer Energieerzeuger vorhanden ist, wird der erste ausschaltbare Energieerzeuger vor (links) dem jeweils betrachteten Energieerzeuger als Ausschaltindikator verwendet. Von allen infrage kommenden Energieerzeugern, wird insbesondere derjenige als Ausschaltindikator bestimmt, der den geringsten Abstand entlang der Reihenfolge zum betrachteten fremdangeforderten Energieerzeuger hat.

Die Steuereinrichtung S kann ferner einen Modus "hohe Taktreduzierung" implementieren. Bei diesem Modus gilt die Annahme, dass ein für eine zweite Energieform F2 fremdangeforderter Energieerzeuger immer zur Deckung eines Energiebedarfs einer ersten Energieform F1 benötigt wird, wenn irgendein Energieerzeuger in einer Reihenfolge des Einschaltens der ersten Energieform F1 eine Einschaltforderung EIN erhält. Als Einschaltindikator eignet sich somit der erste einschaltbare Energieerzeuger in einer Reihenfolge des Einschaltens innerhalb der ersten Energieform F1.

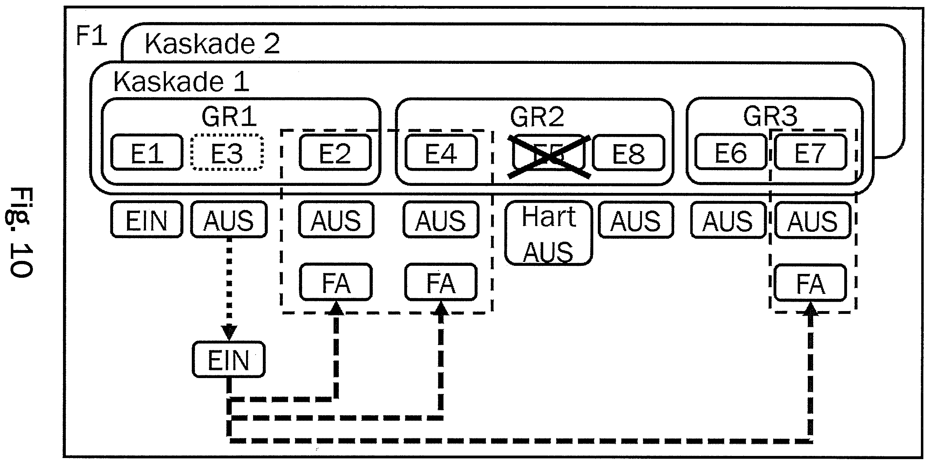

Der Modus "hohe Taktreduzierung" wird anhand der Darstellung in Figur 10 näher erläutert. Figur 10 zeigt ein Beispiel für das Bestimmen des Einschaltindikators im Modus "hohe Taktreduzierung". Die Energieform F1 weist hier acht Energieerzeuger E1-E8 auf. Es versteht sich, dass der Modus in ähnlicher Weise auch bei einer beliebigen anderen Anzahl von Energieerzeugern anwendbar und nicht auf die beispielhafte Anzahl beschränkt ist.

Die drei Energieerzeuger E2, E4, E7 des in Figur 10 gezeigten Beispiels sind von einer zweiten Energieform F2 fremdangefordert. Alle fremdangeforderten Energieerzeuger E2, E4, E7 haben den gleichen Einschaltindikator, nämlich Energieerzeuger E3, welcher in der Reihenfolge des Einschaltens der ersten Energieform F1 der erste einschaltbare Energieerzeuger ist. Sobald der Energieerzeuger E3 eine Einschaltforderung EIN zum Bereitstellen von Energie der ersten Energieform F1 erhält (gepunkteter Pfeil von AUS zu EIN), werden allen fremdangeforderten Energieerzeugern E2, E4, E7 ebenfalls Einschaltforderungen EIN der Energieform F1 erteilt (gestrichelte Pfeile).

Der Modus "hohe Taktreduzierung" funktioniert ohne Ausschaltindikator. Eine Rücknahme der übernommenen Fremdanforderungen wird nicht vorgesehen, da die übernommenen Energieerzeuger E2, E4, E7 durch Ausschaltkriterien der eigenen Energieform F1 abgefordert werden sollen, nachdem die fremdanfordernde Energieform F2 ihre Forderung zurückgezogen hat. Die übernommenen Energieerzeuger E2, E4, E7 werden dann genauso behandelt wie jeder andere Energieerzeuger in Energieform F1, für den eine Einschaltforderung EIN vorliegt. Insbesondere wird ein Energieerzeuger erst dann ausgeschaltet, wenn jede Energieform F1, F2 eine Ausschaltforderung AUS an den betreffenden Energieerzeuger erteilt.

Zusammenfassend wurden drei Regeln zum Übernehmen von Energieerzeugern vorgestellt: keine Übernahme, geringe Taktreduzierung und hohe Taktreduzierung. Das Übernehmen kann anhand von Einschaltindikatoren oder auch ohne Indikator erfolgen. Der Einschaltindikator kann insbesondere der nächste einschaltbare Energieerzeuger sein, der in der Reihenfolge des Einschaltens nach (rechts von) dem betrachteten fremdangeforderten Energieerzeuger steht. Energieerzeuger, die in der Reihenfolge des Einschaltens vor (links von) dem betrachteten fremdangeforderten Energieerzeuger stehen, werden in diesem Betriebsmodus nicht als Einschaltindikatoren betrachtet.

Der Ausschaltindikator ist insbesondere jener Energieerzeuger, der in der Reihenfolge des Einschaltens der letzte ausschaltbare Energieerzeuger nach (rechts von) dem betrachteten fremdangeforderten Energieerzeuger ist. Insbesondere hat der Ausschaltindikator unter allen ausschaltbaren Energieerzeugern innerhalb der Reihenfolge des Einschaltens beziehungsweise Ausschaltens den geringsten Abstand zum fremdangeforderten Energieerzeuger. Falls kein Energieerzeuger vorhanden ist, der diesen Kriterien entspricht, wird der erste Energieerzeuger, der in der Reihenfolge des Einschaltens beziehungsweise Ausschaltens vor (links von) dem betrachteten Energieerzeuger steht, als Ausschaltindikator verwendet.

Bei den oben beschriebenen Verfahren ist zu beachten, dass die Steuereinrichtung S dazu ausgelegt sein kann, Berechnungen zum Steuern der Energieversorgungsanlage periodisch zu vorgegebenen Zeitpunkten k auszuführen. In jedem Berechnungsschritt k kann jeweils nur eine Energieform F1-F3 der sogenannte Master für einen Energieerzeuger sein. Eine Energieform F1-F3 kann solange Master bleiben, bis sie ihre Forderung zurückzieht. Falls in einem Berechnungsschritt k mehrere Energieformen F1-F3 einen Energieerzeuger eine Einschaltforderung EIN erteilen, kann insbesondere die höchstpriorisierte Energieform F1-F3 zum Master des Energieerzeugers werden. Diese Situation kann insbesondere dann auftreten, wenn eine Master-Energieform F1-F3 ihre Einschaltforderung EIN zurückzieht und andere Energieformen F1-F3 den Energieerzeuger übernehmen wollen. In dem Fall wird der Energieerzeuger von der nachfolgenden Energieform F1-F3 "geerbt".

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- V: Vorlauf
- R: Rücklauf
- S: Steuereinrichtung
- S1: erste Steuereinheit
- S2: zweite Steuereinheit
- S3: dritte Steuereinheit
- K: Koordiniereinheit
- P: Pufferspeicher
- R1: erste Regelungseinrichtung
- R2: zweite Regelungseinrichtung
- R3: dritte Regelungseinrichtung
- R4: vierte Regelungseinrichtung
- R5: fünfte Regelungseinrichtung
- E1: erster Energieerzeuger
- E2: zweiter Energieerzeuger
- E3: dritter Energieerzeuger
- E4: vierter Energieerzeuger
- E5: fünfter Energieerzeuger
- G1: erster Gaskessel
- G2: zweiter Gaskessel
- B1: erstes BHKW
- B2: zweites BHKW
- H1: erster Holzkessel
- H2: zweiter Holzkessel
- GR1: erste Gruppe
- GR2: zweite Gruppe
- GR3: dritte Gruppe
- F1: erste Energieform (Wärme)
- F2: zweite Energieform (elektrische Energie)
- F3: dritte Energieform (Kälte)

## Patentansprüche

1. Verfahren zum Steuern einer Energieversorgungsanlage, wobei die Energieversorgungsanlage mindestens aufweist:
- mindestens zwei Energieerzeuger (E1-E5, B1-B2, G1-G2, H1-H2), die dazu ausgelegt sind, jeweils mindestens eine Energieform Wärme (F1) und/oder Kälte (F3) und/oder elektrischer Energie (F2) bereitzustellen;
- je Energieerzeuger eine Regeleinrichtung (R1-R5) zum Regeln des Energieerzeugers (E1-E5, B1-B2, G1-G2, H1-H2); und
- eine Steuereinrichtung (S) zum koordinierten Steuern der Regeleinrichtungen (R1-R5), wobei die Steuereinrichtung (S) die folgenden Verfahrensschritte ausführt:
- Erfassen einer Energiebereitstellungsanforderung (EA) zum Bereitstellen von Energie in Form von Wärme (F1) und/oder Kälte (F3) und/oder elektrischer Energie (F2);
- für jede Energieform (F1-F3), Ermitteln, welche Energieerzeuger (E1-E5, B1-B2, G1-G2, H1-H2) zum Erfüllen der Energiebereitstellungsanforderung (EA) erforderlich sind, **gekennzeichnet durch**:
- für jede Energieform (F1-F3), Erzeugen von Einschaltforderungen (EIN) für die zum Erfüllen der Energiebereitstellungsanforderung (EA) erforderlichen Energieerzeuger (E1-E5, B1-B2, G1-G2, H1-H2) und Erzeugen von Ausschaltforderungen (AUS) für die zum Erfüllen der Energiebereitstellungsanforderung (EA) nicht erforderlichen Energieerzeuger (E1-E5, B1-B2, G1-G2, H1-H2);
- für jeden Energieerzeuger (E1-E5, B1-B2, G1-G2, H1-H2), Ermitteln, ob eine, mehrere oder keine Einschaltforderung (EIN) vorliegt;
- für jeden Energieerzeuger (E1-E5, B1-B2, G1-G2, H1-H2), Ermitteln, ob eine, mehrere oder keine Ausschaltforderung (AUS) vorliegt;
- für jeden Energieerzeuger (E1-E5, B1-B2, G1-G2, H1-H2), für den mindestens eine Einschaltforderung (EIN) vorliegt, Ausgeben der Einschaltforderung (EIN) an die entsprechende Regeleinrichtung und für jeden Energieerzeuger (E1-E5, B1-B2, G1-G2, H1-H2), für den keine Einschaltforderung (EIN) und mindestens eine Ausschaltforderung (AUS) vorliegt, Ausgeben der Ausschaltforderung (AUS) an die entsprechende Regeleinrichtung; oder
- für jeden Energieerzeuger (E1-E5, B1-B2, G1-G2, H1-H2), für den mindestens eine Ausschaltforderung (AUS) vorliegt, Ausgeben der Ausschaltforderung (AUS) an die entsprechende Regeleinrichtung und für jeden Energieerzeuger (E1-E5, B1-B2, G1-G2, H1-H2), für den keine Ausschaltforderung (AUS) und mindestens eine Einschaltforderung (EIN) vorliegt, Ausgeben der Einschaltforderung (EIN) an die entsprechende Regeleinrichtung.

2. Verfahren nach Anspruch 1, wobei die Steuereinrichtung (S) ferner die folgenden Verfahrensschritte ausführt:
- für jeden Energieerzeuger (E1-E5, B1-B2, G1-G2, H1-H2), Bestimmen von Sollwerten (SW) zum Erfüllen der Energiebereitstellungsanforderung (EA) in Abhängigkeit der ermittelten Einschaltforderung(en) (EIN) und/oder Ausschaltforderung(en) (AUS);
- Ausgeben der Sollwerte (SW) an die Regeleinrichtungen (R1-R5).

3. Verfahren nach mindestens einem der vorhergehenden Ansprüche, wobei mindestens einer der Energieerzeuger (E1-E5, B1-B2, G1-G2, H1-H2) dazu ausgelegt ist, gleichzeitig mindestens zwei Energieformen (F1-F3) bereitzustellen.

4. Verfahren nach Anspruch 3, wobei die Steuereinrichtung (S) ferner die folgenden Verfahrensschritte ausführt:
- Ermitteln eines zum gleichzeitigen Bereitstellen einer ersten Energieform (F1-F3) und einer zweiten Energieform (F1-F3) ausgelegten ersten Energieerzeugers (E1), für den eine Einschaltforderung (EIN) der ersten Energieform (F1-F3) und eine Ausschaltforderung (AUS) der zweiten Energieform (F1-F3) vorliegt;
- Ermitteln eines zum Bereitstellen der zweiten Energieform (F1-F3) ausgelegten zweiten Energieerzeugers (E2), für den eine Einschaltforderung (EIN) der zweiten Energieform (F1-F3) vorliegt;
- Erzeugen einer Einschaltforderung (EIN) der zweiten Energieform (F1-F3) für den ersten Energieerzeuger (E1);
- Erzeugen einer Ausschaltforderung (AUS) der zweiten Energieform (F1-F3) für den zweiten Energieerzeuger (E2).

5. Verfahren nach mindestens einem der vorhergehenden Ansprüche, wobei die Energieversorgungsanlage eine multivalente Energieversorgungsanlage ist, deren Energieerzeuger (E1-E5, B1-B2, G1-G2, H1-H2) insgesamt mindestens zwei verschiedene Energieträger nutzen.

6. Verfahren nach mindestens einem der vorhergehenden Ansprüche, wobei die Steuereinrichtung (S) für jede Energieform (F1-F3) jeweils eine Reihenfolge des Einschaltens und/oder Ausschaltens der Energieerzeuger (E1-E5, B1-B2, G1-G2, H1-H2) erfasst oder festlegt und das Bestimmen der Einschaltforderungen (EIN) und/oder Ausschaltforderungen (AUS) in Abhängigkeit der Reihenfolge erfolgt.

7. Verfahren nach mindestens einem der vorhergehenden Ansprüche, wobei mindestens einer der Energieerzeuger ein Blockheizkraftwerk (BHKW) ist, das dafür ausgelegt ist, gleichzeigt Energie in Form von Wärme (F1) und elektrischer Energie (F3) bereitzustellen.

## Claims

1. A method for controlling an energy supply system, wherein the energy supply system comprises at least:
- at least two energy generators (E1-E5, B1-B2, G1-G2, H1-H2) which are designed to provide respectively at least one energy form of heat (F1) and/or cold (F3) and/or electrical energy (F2) ;
- for each energy generator a closed-loop controller (R1-R5) for controlling the energy generator (E1-E5, B1-B2, G1-G2, H1-H2); and
- a control device (S) for the coordinated control of the closed-loop controllers (R1-R5), wherein the control device (S) performs the following method steps:
- detecting an energy supply request (EA) for providing energy in the form of heat (F1) and/or cold (F3) and/or electrical energy (F2);
- for each energy form (F1-F3) determining which energy generators (E1-E5, B1-B2, G1-G2, H1-H2) are required for fulfilling the energy supply request (EA), **characterized by**:
- for each energy form (F1-F3) generating switch-on requests (ON) for the energy generators (E1-E5, B1-B2, G1-G2, H1-H2) which are required for fulfilling the energy supply request (EA) and generating switch-off requests (OFF) for the energy generators (E1-E5, B1-B2, G1-G2, H1-H2) which are not required for fulfilling the energy supply request (EA);
- for each energy generator (E1-E5, B1-B2, G1-G2, H1-H2) determining whether one, several or no switch-on request (ON) is present;
- for each energy generator (E1-E5, B1-B2, G1-G2, H1-H2) determining whether one, several or no switch-off request (OFF) is present;
- for each energy generator (E1-E5, B1-B2, G1-G2, H1-H2) for which at least one switch-on request (ON) is present, outputting the switch-on request (ON) to the corresponding closed-loop controller and for each energy generator (E1-E5, B1-B2, G1-G2, H1-H2) for which no switch-on request (ON) and at least one switch-off request (OFF) is present, outputting the switch-off request (OFF) to the corresponding closed-loop controller; or
- for each energy generator (E1-E5, B1-B2, G1-G2, H1-H2) for which at least one switch-off request (OFF) is present, outputting the switch-off request (OFF) to the corresponding closed-loop controller and for each energy generator (E1-E5, B1-B2, G1-G2, H1-H2) for which no switch-off request (OFF) and at least one switch-on request (ON) is present, outputting the switch-on request (ON) to the corresponding closed-loop controller.

2. The method according to Claim 1, wherein the control device (S) also performs the following method steps:
- for each energy generator (E1-E5, B1-B2, G1-G2, H1-H2) determining target values (SW) for fulfilling the energy supply request (EA) as a function of the determined switch-on request(s) (ON) and/or switch-off request(s) (OFF);
- outputting the target values (SW) to the closed-loop controllers (R1-R5).

3. The method according to at least one of the preceding claims, wherein at least one of the energy generators (E1-E5, B1-B2, G1-G2, H1-H2) is designed to provide simultaneously at least two energy forms (F1-F3).

4. The method according to Claim 3, wherein the control device (S) also performs the following method steps:
- determining a first energy generator (E1) which is designed for simultaneously providing a first energy form (F1-F3) and a second energy form (F1-F3), and for which a switch-on request (ON) of the first energy form (F1-F3) and a switch-off request (OFF) of the second energy form (F1-F3) is present;
- determining a second energy generator (E2) which is designed for providing the second energy form (F1-F3), and for which a switch-on request (ON) of the second energy form (F1-F3) is present;
- generating a switch-on request (ON) of the second energy form (F1-F3) for the first energy generator (E1);
- generating a switch-off request (OFF) of the second energy form (F1-F3) for the second energy generator (E2).

5. The method according to at least one of the preceding claims, wherein the energy supply system is a multivalent energy supply system, the energy generators thereof (E1-E5, B1-B2, G1-G2, H1-H2) using a total of at least two different energy carriers.

6. The method according to at least one of the preceding claims, wherein the control device (S) for each energy form (F1-F3) respectively detects or establishes an order of switching on and/or switching off the energy generators (E1-E5, B1-B2, G1-G2, H1-H2) and the switch-on requests (ON) and/or switch-off requests (OFF) are determined as a function of the order.

7. The method according to at least one of the preceding claims, wherein at least one of the energy generators is a combined heat and power plant (BHKW) which is designed to provide simultaneously energy in the form of heat (F1) and electrical energy (F3).

## Revendications

1. Procédé pour commander un système d'alimentation en énergie, dans lequel le système d'alimentation en énergie présente :
- au moins deux générateurs d'énergie (E1-E5, B1-B2, G1-G2, H1-H2), qui sont conçus pour fournir respectivement au moins une forme d'énergie chaleur (F1) et/ou froid (F3) et/ou énergie électrique (F2) ;
- par générateur d'énergie, un dispositif de régulation (R1-R5) pour réguler le générateur d'énergie (E1-E5, B1-B2, G1-G2, H1-H2); et
- un dispositif de commande (S) pour commander de manière coordonnée les dispositifs de régulation (R1-R5), dans lequel le dispositif de commande (S) réalise les étapes de procédé suivantes :
- la détection d'une demande de fourniture d'énergie (EA) pour fournir de l'énergie sous forme de chaleur (F1) et/ou de froid (F3) et/ou d'énergie électrique (F2) ;
- pour chaque forme d'énergie (F1-F3), le fait de déterminer quels générateurs d'énergie (E1-E5, B1-B2, G1-G2, H1-H2) sont nécessaires pour satisfaire à la demande de fourniture d'énergie (EA), **caractérisé par** :
- pour chaque forme d'énergie (F1-F3), la génération de demandes d'activation (EIN) pour les générateurs d'énergie (E1-E5, B1-B2, G1-G2, H1-H2) nécessaires pour satisfaire à la demande de fourniture d'énergie (EA) et la génération de demandes de désactivation (AUS) pour les générateurs d'énergie (E1-E5, B1-B2, G1-G2, H1-H2) non nécessaires pour satisfaire la demande de fourniture d'énergie (EA) ;
- pour chaque générateur d'énergie (E1-E5, B1-B2, G1-G2, H1-H2), le fait de déterminer si une, plusieurs ou aucune demande d'activation (EIN) est présente ;
- pour chaque générateur d'énergie (E1-E5, B1-B2, G1-G2, H1-H2), le fait de déterminer si une, plusieurs ou aucune demande de désactivation (AUS) est présente ;
- pour chaque générateur d'énergie (E1-E5, B1-B2, G1-G2, H1-H2), pour lequel au moins une demande d'activation (EIN) est présente, la distribution de la demande d'activation (EIN) au dispositif de régulation correspondant et pour chaque générateur d'énergie (E1-E5, B1-B2, G1-G2, H1-H2), pour lequel aucune demande d'activation (EIN) et au moins une demande de désactivation (AUS) est présente, la distribution de la demande de désactivation (AUS) au dispositif de régulation correspondant ; ou
- pour chaque générateur d'énergie (E1-E5, B1-B2, G1-G2, H1-H2), pour lequel au moins une demande de désactivation (AUS) est présente, la distribution de la demande de désactivation (AUS) au dispositif de régulation correspondant et pour chaque générateur d'énergie (E1-E5, B1-B2, G1-G2, H1-H2), pour lequel aucune demande de désactivation (AUS) et au moins une demande d'activation (EIN) est présente, la distribution de la demande d'activation (EIN) au dispositif de régulation correspondant.

2. Procédé selon la revendication 1, dans lequel le dispositif de commande (S) réalise en outre les étapes de procédé suivantes :
- pour chaque générateur d'énergie (E1-E5, B1-B2, G1-G2, H1-H2), la définition de valeurs théoriques (SW) pour satisfaire à la demande de fourniture d'énergie (EA) en fonction des demandes d'activation (EIN) et/ou demandes de désactivation (AUS) déterminées ;
- la distribution des valeurs théoriques (SW) aux dispositifs de régulation (R1-R5).

3. Procédé selon au moins l'une des revendications précédentes, dans lequel au moins un des générateurs d'énergie (E1-E5, B1-B2, G1-G2, H1-H2) est conçu pour fournir simultanément au moins deux formes d'énergie (F1-F3).

4. Procédé selon la revendication 3, dans lequel le dispositif de commande (S) réalise en outre les étapes de procédé suivantes :
- la détermination d'un premier générateur d'énergie (E1) conçu pour fournir simultanément une première forme d'énergie (F1-F3) et une deuxième forme d'énergie (F1-F3), pour lequel une demande d'activation (EIN) de la première forme d'énergie (F1-F3) et une demande de désactivation (AUS) de la deuxième forme d'énergie (F1-F3) est présente ;
- la détermination d'un deuxième générateur d'énergie (E2) conçu pour la fourniture de la deuxième forme d'énergie (F1-F3), pour lequel une demande d'activation (EIN) de la deuxième forme d'énergie (F1-F3) est présente ;
- la génération d'une demande d'activation (EIN) de la deuxième forme d'énergie (F1-F3) pour le premier générateur d'énergie (E1) ;
- la génération d'une demande de désactivation (AUS) de la deuxième forme d'énergie (F1-F3) pour le deuxième générateur d'énergie (E2).

5. Procédé selon au moins l'une des revendications précédentes, dans lequel le système d'alimentation en énergie est un système d'alimentation en énergie polyvalent, dont les générateurs d'énergie (E1-E5, B1-B2, G1-G2, H1-H2) exploitent au total au moins deux sources d'énergie différentes.

6. Procédé selon au moins l'une des revendications précédentes, dans lequel le dispositif de commande (S) détecte ou fixe pour chaque forme d'énergie (F1-F3) respectivement un ordre d'activation et/ou de désactivation des générateurs d'énergie (E1-E5, B1-B2, G1-G2, H1-H2) et la définition des demandes d'activation (EIN) et/ou demandes de désactivation (AUS) s'effectue en fonction de l'ordre.

7. Procédé selon au moins l'une des revendications précédentes, dans lequel au moins un des générateurs d'énergie est une centrale de cogénération (BHKW), qui est conçue pour fournir simultanément de l'énergie sous forme de chaleur (F1) et d'énergie électrique (F3).
